# EUROPÄISCHE PATENTANMELDUNG

(11) **EP 4 134 335 A1**
(43) Veröffentlichungstag der Anmeldung: **15.02.2023**
(21) Anmeldenummer: 22189398.5
(22) Anmeldetag: 09.08.2022
(51) Int. Cl.: B65G 1/04

(54) **VERFAHREN ZUM INSTANDSETZEN EINER KOMMISSIONIERVORRICHTUNG**

(30) Priorität: 10.08.2021 DE 102021004093
(71) Anmelder: KNAPP Smart Solutions GmbH, 45881 Gelsenkirchen (DE)
(72) Erfinder: BAUER, Christian, 45136 Essen (DE)
(74) Vertreter: König Szynka Tilmann von Renesse Patentanwälte Partnerschaft mbB Düsseldorf

(57) **Zusammenfassung**

Verfahren zur Instandsetzung einer Kommissioniervorrichtung, wobei die Kommissioniervorrichtung mindestens
• ein Regal zum Lagern von Gütern,
• ein Regalbediengerät, das dazu geeignet ist, Güter an bestimmten Orten des Regals einzulagern, und/oder dazu geeignet ist, Güter, die sich an einem bestimmten Ort des Lagers befinden, auszulagern, und
• eine Steuerung, die dazu ausgeführt ist, Bewegungen des Regalbediengeräts und/oder Bewegungen von Komponenten des Regalbediengeräts zu steuern, aufweist und die Kommissioniervorrichtung einen Wartungsort aufweist, wobei die Steuerung das Regalbediengerät an den Wartungsort verfahren kann und/oder die Steuerung das Regalbediengerät von dem Wartungsort fortfahren kann, bei dem
• ein erstes Regalbediengerät an den Wartungsort verfahren wird,
• das erste Regalbediengerät an dem Wartungsort aus der Kommissioniervorrichtung entnommen wird,
• ein zweites Regalbediengerät an dem Wartungsort in die Kommissioniervorrichtung eingesetzt wird und
• das zweite Regalbediengerät von dem Wartungsfort fortgefahren wird.

## Beschreibung

Die Erfindung betrifft ein Verfahren zum Instandsetzen einer Kommissioniervorrichtung.

Eine Kommissioniervorrichtung weist ein Regal zum Lagern von Gütern auf. Ferner weist eine Kommissioniervorrichtung ein Regalbediengerät auf, das dazu geeignet ist, Güter an bestimmte Orte des Regals, beispielsweise an einen bestimmten Ort auf einem Regalboden eines Regals einzulagern und/oder dazu geeignet ist, Güter, die sich an einem bestimmten Ort des Lagers, beispielsweise an einem bestimmten Ort auf einem bestimmten Regalboden eines Lagers befinden, auszulagern. Ferner weist eine Kommissioniervorrichtung eine Steuerung auf. Die Steuerung ist dazu ausgeführt, Bewegungen des Regalbediengeräts bzw. Bewegungen von Komponenten des Regalbediengerät zu steuern, wobei der Begriff "steuern" im Sinne der Regelungstechnik nicht nur das Steuern, sondern auch das Regeln umfasst und als Oberbegriff für das regelungstechnische Steuern und das regelungstechnische Regeln verstanden werden soll.

Derartige Kommissioniervorrichtungen sind aus EP 2 826 732 A1, DE 10 2005 012 910 A1, EP 2 042 477 A1 und EP 1 564 160 A1 bekannt.

Vor diesem Hintergrund lag der Erfindung die Aufgabe zu Grunde, ein Verfahren zum Instandsetzen einer Kommissioniervorrichtung zu schaffen, das die Instandsetzung vereinfacht.

Diese Aufgabe wird durch das Verfahren gemäß Anspruch 1 gelöst. Vorteilhafte Ausführungsformen sind in der hier nachfolgenden Beschreibung und den Unteransprüchen angegeben.

Die Erfindung geht von dem Grundgedanken aus, die Kommissioniervorrichtung mit einem Wartungsort auszustatten, wobei die Steuerung das Regalbediengerät an den Wartungsort verfahren kann und/oder die Steuerung das Regalbediengerät von dem Wartungsort fortfahren kann, und im Zuge des erfindungsgemäßen Verfahrens
- ein erstes Regalbediengerät an den Wartungsort zu verfahren,
- das erste Regalbediengerät an dem Wartungsort aus der Kommissioniervorrichtung zu entnehmen,
- ein zweites Regalbediengerät an dem Wartungsort in die Kommissioniervorrichtung einzusetzen und
- das zweite Regalbediengerät von dem Wartungsort fortzufahren.

Die Erfindung macht sich die Erkenntnis zu Nutze, dass der Austausch eines kompletten Regalbediengeräts nach dem erfindungsgemäßen Verfahren in einer Vielzahl von Instandsetzungsfällen rascher erfolgen kann, als die Durchführung einer Instandsetzung, insbesondere einer Wartung und/oder Reparatur an dem jeweiligen Regalbediengerät. Während es im Stand der Technik notwendig ist, bei einer Instandsetzung, also beispielsweise einer Wartung oder einer Reparatur an einem Regalbediengerät, die Kommissioniervorrichtung für die gesamte Zeitdauer der Instandsetzung aus dem regulären Betrieb zu nehmen, erlaubt es das erfindungsgemäße Verfahren, im Falle einer Instandsetzung lediglich das erste Regalbediengerät durch ein zweites Regalbediengerät auszutauschen. Dieser Austausch ist in der Mehrzahl der Instandsetzungs-Szenarien rascher, als die Durchführung der Instandsetzung selbst.

Außerdem bietet das erfindungsgemäße Verfahren die Möglichkeit, dass die Instandsetzung des Regalbediengeräts nicht vor Ort durchgeführt werden muss. Das erfindungsgemäße Verfahren macht es möglich, dass das Regalbediengerät vor Ort gewechselt wird und dann das der Kommissioniervorrichtung entnommene Regalbediengerät zur Instandsetzung an einen anderen Ort verbracht wird. Bei dem erfindungsgemäßen Verfahren ist es sogar möglich, dass der Austausch des Regalbediengeräts durch Personen, beispielsweise den Nutzer der Kommissioniervorrichtung, durchgeführt wird, die nicht für die Instandhaltung des Regalbediengeräts geschult sind und/oder nicht über die ggf. zur Instandhaltung des Regalbediengeräts notwendigen Werkzeuge und/oder Ersatzteile verfügen.

In einer bevorzugten Ausführungsform weist die Kommissioniervorrichtung eine Schiene auf, die von einem vor dem Regal befindlichen Arbeitsbereich zu dem Wartungsort führt, wobei das Regalbediengerät entlang der Schiene von dem Arbeitsbereich an den Wartungsort verfahren werden kann und/oder entlang der Schiene von dem Wartungsort in den Arbeitsbereich gefahren werden kann.

In einer bevorzugten Ausführungsform weist die Kommissioniervorrichtung einen Innenraum auf, wobei der Wartungsort außerhalb des Innenraums liegt.

In einer bevorzugten Ausführungsform führt ein Regalbediengerät, das von dem Wartungsort fort in einen Arbeitsbereich des Regalbediengeräts verfahren wird, eine Kalibrierfahrt durch.

Die erfindungsgemäße Kommissioniervorrichtung kann als eine Art Hochregallager ausgeführt sein, womit gemeint ist, dass das Regal der Kommissioniervorrichtung eine Höhe von mehr als 4m, insbesondere bevorzugt mehr als 5m, insbesondere bevorzugt mehr als 6m aufweist. In einer besonders bevorzugten Ausführungsform ist die Kommissioniervorrichtung jedoch nicht als Hochregallager ausgeführt. In einer bevorzugten Ausführungsform ist die Kommissioniervorrichtung derart ausgeführt, dass sie sich in einen Raum eines Geschäftshauses einbauen lässt, beispielsweise in den Raum einer Apotheke. In einer bevorzugten Ausführungsform ist die Höhe des Regals <6m, insbesondere bevorzugt <5m, insbesondere bevorzugt <4m, insbesondere bevorzugt <3,50m.

In einer bevorzugten Ausführungsform ist das Regal langgestreckt ausgeführt. Unter einem langgestreckten Regal wird ein Regal verstanden, das eine Länge in einer Längsrichtung aufweist und eine Breite in eine zur Längsrichtung senkrecht verlaufende Breitenrichtung und eine Höhe in Richtung einer senkrecht zur Längsrichtung und senkrecht zur Breitenrichtung stehenden Höhenrichtung aufweist, wobei die Länge größer als die Breite ist und die Länge größer als die Höhe ist. In einer bevorzugten Ausführungsform ist die Länge mindestens 2-fach, insbesondere bevorzugt 2,5-fach, insbesondere bevorzugt 3-fach, insbesondere bevorzugt 3,5-fach, insbesondere bevorzugt 4-fach größer als die Breite. In einer bevorzugten Ausführungsform ist die Länge mindestens 2-fach, insbesondere bevorzugt 2,5-fach, insbesondere bevorzugt 3-fach, insbesondere bevorzugt 3,5-fach, insbesondere bevorzugt 4-fach größer als die Höhe. In einer bevorzugten Ausführungsform ist die Höhe mindestens 2-fach, insbesondere bevorzugt 2,5-fach, insbesondere bevorzugt 3-fach, insbesondere bevorzugt 3,5-fach, insbesondere bevorzugt 4-fach größer als die Breite.

In einer bevorzugten Ausführungsform weist das Regal Regalböden auf. In einer bevorzugten Ausführungsform weist ein Regalboden des Regals eine Länge in Längsrichtung des Regals auf, die in dem Bereich von 50mm bis 500mm liegt. In einer bevorzugten Ausführungsform weist der Regalboden eine Tiefe in Breitenrichtung des Regals auf, die in den Bereich von 5mm bis 500mm liegt. In einer bevorzugten Ausführungsform weist das Regal zwei übereinander angeordnete Regalböden auf, wobei der Abstand zwischen der Oberseite des unteren Regalboden und der Unterseite des oberen Regalboden in Höhenrichtung des Regals in dem Bereich von 5mm bis 500mm liegt.

In einer bevorzugten Ausführungsform ist zumindest einer, insbesondere bevorzugt die Mehrzahl (mehr als 50%), insbesondere bevorzugt die überwiegende Mehrzahl (mehr als 75%) der vorhandenen Regalböden des Regals aus Kunststoff, insbesondere bevorzugt Glas, Plexiglas, Metall oder Holz. In einer bevorzugten Ausführungsform ist die Mehrzahl (mehr als 50%), insbesondere bevorzugt die überwiegende Mehrzahl (mehr als 75%) der vorhandenen Regalböden aus dem gleichen Material.

In einer bevorzugten Ausführungsform weist das Regal mehrere Regalböden auf, wobei in dieser bestimmten Ausführungsform alle Regalböden des Regals die gleiche Länge und die gleiche Tiefe haben und alle Regalböden des Regals den gleichen Abstand zueinander aufweisen. In einer besonders bevorzugten Ausführungsform haben nicht alle Regalböden des Regals die gleiche Länge oder die gleiche Tiefe oder haben den gleichen Abstand zueinander, wobei nämlich zumindest ein Regalboden eine andere Länge als ein anderer Regalboden und/oder eine andere Tiefe als ein anderer Regalboden und/oder einen anderen Abstand zu einem Regalboden, als ein anderer Regalboden zu einem weiteren Regalboden hat, aufweist.

In einer bevorzugten Ausführungsform ist der Regalboden dazu ausgeführt, 50kg Traglast aufzunehmen. Ein Regalboden kann versteift sein, um eine Durchbiegung auf ein Minimum zu reduzieren bzw. eine maximale Ebenheit zu erreichen. Es können Regalböden mit reduzierter Haftung vorgesehen sein, beispielsweise im Bereich gekühlter Regale. Es sind Regalböden für Bereiche gekühlter Regale / integrierter Kühlschränke möglich, die den Abfluss von Kondensat ermöglichen, und bevorzugt in Lochblech-Bauweise ausgefertigt sind. In einer bevorzugten Ausführungsform ist eine integrierte Auffangwanne vorgesehen, die das Kondensat in eine definierte Richtung ableitet. Die Regalböden können in Gitterrost-Bauweise ausgeführt sein.

In einer bevorzugten Ausführungsform ist zumindest ein Regalboden des Regals, vorzugsweise die Mehrzahl (mehr als 50% der vorhandenen Regalböden), insbesondere bevorzugt mehr als 70% der vorhandenen Regalböden und insbesondere bevorzugt alle Regalböden so ausgeführt, dass die Oberfläche, auf der das Gut liegen soll, horizontal verläuft.

In einer bevorzugten Ausführungsform weist das Regal eine Schublade auf. In einer bevorzugten Ausführungsform weist das Regal Schubladen und Regalböden auf. In einer bevorzugten Ausführungsform weist das Regal mehr Schubladen als Regalböden auf. In einer alternativen Ausführungsform weist das Regal mehr Regalböden als Schubladen auf. In einer bevorzugten Ausführungsform kann das Regal so ausgeführt sein, dass die Schublade nach oben offen ist und oberhalb der Schublade ein Freiraum vorgesehen ist, in den ein Teil des Regalbediengeräts gelangen kann, um von dort das Gut in die Schublade fallenzulassen. Ebenso sind Ausführungsformen möglich, bei denen die Schublade an einer Seite offen ist, beispielsweise keine Seitenwand aufweist oder eine Öffnung in der Seitenwand aufweist oder am hinteren Ende offen ist, also beispielsweise keine Rückwand aufweist oder in einer Rückwand eine Öffnung aufweist, so dass mittels des Regalbediengeräts durch die jeweilige Öffnung ein Gut in die Schublade gelegt werden kann oder der Schublade entnommen werden kann. Dadurch wird es möglich, Güter in die Schublade zu legen und die Güter aus der Kommissioniervorrichtung zu entnehmen, indem die Schublade zumindest teilweise aus dem Regal gezogen wird. Ebenso ist es bei einer solchen Ausführungsform möglich, die Kommissioniervorrichtung mit Gütern zu bestücken, indem eine Schublade zumindest teilweise aus dem Regal gezogen wird, das Gut in die Schublade gelegt und die Schublade wieder in das Regal geschoben wird, in welcher Position das Regalbediengerät dann durch die jeweilige Öffnung Zugriff auf das so in das Regal gelangte Gut hat.

Das Regal kann aus einzelnen Regalmodulen zusammengesetzt werden.

Das Regal weist insbesondere bevorzugt zumindest vier Regalpfosten auf, wobei jeder Regalpfosten in einer von vier Ecken des Regals angeordnet ist, wobei sich zumindest ein Regalboden des Regals zwischen den vier Regalposten befindet. In einer bevorzugten Ausführungsform ist der Regalboden rechteckig, insbesondere bevorzugt quadratisch, ausgeführt, wobei jede Ecke des Regalbodens neben einem Regalpfosten angeordnet ist. In einer bevorzugten Ausführungsform ist eine Schiene zwischen einem ersten Regalpfosten und einem zweiten Regalpfosten vorgesehen, wobei der Regalboden auf der Schiene aufliegt. In einer bevorzugten Ausführungsform ist eine weitere Schiene zwischen einem dritten und einem vierten Regalpfosten vorgesehen, die parallel zu der Schiene verläuft, wobei der Regalboden sich auf beiden Schienen abstützt. In einer bevorzugten Ausführungsform sind drei Schienen vorgesehen, die zusammen die Form eines U bilden, wobei der Regalboden auf den drei Schienen aufliegt. In einer alternativen Ausführungsform sind vier Schienen vorgesehen, die zusammen ein Rechteck bilden, wobei ein Regalboden auf allen vier Schienen aufliegt. Schienen können beispielsweise in Form von Winkelprofilen ausgeführt sein.

In einer bevorzugten Ausführungsform sind bewegliche Verschlusselemente vorgesehen, mit denen zumindest ein Teil einer Seite des Regals verschlossen werden kann. Beispielsweise sind horizontal oder vertikal oder schräg verschiebbar Türen vorgesehen. Derartige Türen können so ausgeführt sein, dass sie in einer ersten Stellung einen ersten Teil einer Seite des Regals verschließen und in einer zweiten Stellung einen zweiten Teil der gleichen Seite des Regals verschließen. In einer bevorzugten Ausführungsform kann eine solche Tür dann in einer dritten Position aus dem Regal herausgeführt werden, in der es die Seite komplett freigibt. Es sind Ausführungsformen möglich, bei denen das Verschlusselement als Rollladen ausgeführt ist. Ebenso sind Falltüren nach Art einer Guillotine möglich. Es sind verschwenkbare Türen denkbar, die um eine horizontale Achse oder um eine vertikale Achse verschwenkt werden können. Das Verschließen einer Seite des Regals kann dazu genutzt werden, die hinter dem Verschlusselement befindlichen Güter vor einem Zugriff zu schützen. Ferner kann das Verschließen des Teils einer Seite des Regals dazu genutzt werden, Kollisionen zu verhindern. Wird der Teil einer Seite des Regals durch ein Verschlusselement verschlossen, über den ein Regalbediengerät bei geöffnetem Teil der Seite Zugriff zu den Gütern hätte, so kann durch Verschließen dieses Teils der Seite verhindert werden, dass das Regalbediengerät auf das Gut zugreifen kann. Dadurch kann ermöglicht werden, dass ein anderes Regalbediengerät oder aber ein Bediener händisch auf das jeweilige Gut Zugriff hat, ohne Gefahr zu laufen, mit dem Regalbediengerät zu kollidieren, das sonst über die nun verschlossene Seite ebenfalls Zugriff hätte.

In einer bevorzugten Ausführungsform wird die erfindungsgemäße Kommissioniervorrichtung zum Lagern von Gütern verwendet, insbesondere bevorzugt zum Lagern von Gütern verwendet, deren Länge zwischen 10 und 400mm liegt und/oder dessen Breite zwischen 10 und 300mm liegt und/oder dessen Höhe zwischen 10 und 200mm liegt.

Das erfindungsgemäße System weist eine erfindungsgemäße Vorrichtung und ein Gut auf, das sich in dem Regal befindet.

In einer bevorzugten Ausführungsform weist die erfindungsgemäße Kommissioniervorrichtung mehrere Regale auf. In einer bevorzugten Ausführungsform weist die erfindungsgemäße Kommissioniervorrichtung ein erstes Regal und ein zweites, parallel zum ersten Regal verlaufendes Regal auf. Dabei verläuft insbesondere bevorzugt die Längsrichtung des ersten Regals parallel zur Längsrichtung des zweiten Regals. Es sind auch Bauformen denkbar, bei denen ein zweites Regal im Winkel, beispielsweise im Winkel von 90°, zum ersten Regal angeordnet ist.

In einer bevorzugten Ausführungsform weist zumindest eines, vorzugsweise die Mehrzahl (mehr als 50%), insbesondere bevorzugt die überwiegende Mehrzahl (mehr als 75%) der vorhandenen Regale und ganz besonders bevorzugt jedes vorhandene Regal eine Rückwand auf. Die Rückwand ist vorzugsweise an der den anderen vorhandenen Regalen abgewandten Seite des jeweiligen Regals vorgesehen, so dass sich die Regale zu einem Inneren der Kommissioniervorrichtung hin öffnen. Die Rückwände können Öffnungen, beispielsweise eine Auswurfsöffnung oder eine Einführöffnung, enthalten. Möglicherweise in dem Regal vorgesehene Schubladen können in Richtung der Rückwand aus der Rückwand herausgezogen werden. Die Rückwand kann als bewegliche Tür oder Wand oder als Rollladen ausgeführt sein.

In einer bevorzugten Ausführungsform weist zumindest eines, vorzugsweise die Mehrzahl (mehr als 50%), insbesondere bevorzugt die überwiegende Mehrzahl (mehr als 75%) der vorhandenen Regale und ganz besonders bevorzugt jedes vorhandene Regal zumindest eine Seitenwand auf. Die Seitenwand ist vorzugsweise an der den anderen vorhandenen Regalen abgewandten Seite des jeweiligen Regals vorgesehen, so dass sich die Regale zu einem Inneren der Kommissioniervorrichtung hin öffnen. Die Seitenwände können Öffnungen, beispielsweise eine Auswurfsöffnung oder eine Einführöffnung, enthalten. Möglicherweise in dem Regal vorgesehene Schubladen können in Richtung der Seitenwand aus der Rückwand herausgezogen werden. Die Seitenwand kann zumindest teilweise als bewegliche Tür oder Wand oder als Rollladen ausgeführt sein.

In einer bevorzugten Ausführungsform weist zumindest ein Regal eine Trennwand auf, die zumindest auf einer Seite über die Vorderkante zumindest eines Regalbodens übersteht. Die Trennwand kann horizontal verlaufen. Die Trennwand kann vertikal verlaufen. Mittels einer Trennwand oder in einer bevorzugten Ausführungsform mit mehreren, aneinander angrenzenden Trennwänden, insbesondere bevorzugt mit mehreren, aneinander angrenzenden im Winkel von 90° zueinander verlaufenden Trennwänden, kann ein Teil des Regals von einem anderen Teil des Regals abgegrenzt werden. Eine solche Abgrenzung kann beispielsweise dazu genutzt werden, in einem Regal unterschiedliche Klimazonen vorzusehen. Es sind Kühlschränke / Regalbereiche mit Kühlfunktion möglich. Die Trennwände können genutzt werden, um ein Verschlusselement, beispielsweise einen Rollladen, das einen durch Trennwände abgegrenzten Bereich eines Regals verschließen kann, zu führen. Beispielsweise können die Schienen eines Rollladens in Trennwänden ausgeführt sein.

Die Trennwände können in ein Regal eingebaut werden. Wird ein Regal aus Modulen zusammengesetzt, so können die Trennwände beispielsweise Wände sein, die ein Modul begrenzen.

In einer bevorzugten Ausführungsform weist das Regal einen zumindest an beiden Seiten, vorzugsweise an beiden Seiten sowie oben und unten durch Trennwände abgegrenzten Bereich, eine sogenannte Zone, auf, wobei die Vorderkanten der in der Zone vorgesehenen Regalböden im Verhältnis zur Vorderkante der Trennwände zurückgesetzt sind, die Vorderkante der Trennwände also bezüglich der Vorderkanten der Regalböden in dieser Zone vorspringt. Als Vorderkante der Regalböden und als Vorderkante der Trennwand wird dabei insbesondere die dem Regalbediengerät zugewandte Kante der Regalböden bzw. der Trennwand verstanden.

In einer bevorzugten Ausführungsform erstreckt sich eine Trennwand in Höhenrichtung über mehrere Regalböden.

Ergänzend oder alternativ zu Trennwänden, die sich über mehrere Regalböden erstrecken und vorzugsweise dazu genutzt werden, Zonen im Regal zu bilden, können im Regal eine Trennwand oder mehrere Trennwände vorgesehen sein, die jeweils zwischen zwei Regalböden vorgesehen sind und den Raum zwischen zwei Regalböden in Fächer unterteilen. Derartig eingesetzte Trennwände haben insbesondere bevorzugt Vorderkanten, die in der selben Ebene angeordnet sind, wie die Vorderkanten der beiden Regalböden, zwischen denen sie angeordnet sind. Derartig eingesetzte Trennwände können auch derart ausgeführt sein, dass ihre jeweiligen Vorderkanten, bezüglich der Ebene, in der die Vorderkanten der beiden Regalböden, zwischen denen sie angeordnet sind, zurückgesetzt sind.

In einer bevorzugten Ausführungsform ist ein Regalboden eines Regals innerhalb des Regals beweglich angeordnet. Beispielsweise kann ein Regalboden mittels Hydraulikstößeln in Höhenrichtung des Regals angehoben oder abgesenkt werden. Oder ein Regalboden kann in Längsrichtung des Regals, beispielsweise in Schienen, verschoben werden. Oder ein Regalboden kann in Breitenrichtung des Regals, beispielsweise in Schienen, verschoben werden.

In einer bevorzugten Ausführungsform bildet zumindest eine Rückwand eines Regals eine Begrenzungswand oder einen Teil einer Begrenzungswand der erfindungsgemäßen Kommissioniervorrichtung. In einer bevorzugten Ausführungsform weist die Kommissioniervorrichtung eine Vorderseite, eine Rückseite und zwei Seitenwände auf, wobei
- die Vorderseite zumindest in Teilen aus einer Rückwand oder einer Seitenwand eines Regals der Kommissioniervorrichtung gebildet wird und/oder
- die Rückseite zumindest in Teilen aus einer Rückwand oder einer Seitenwand eines Regals der Kommissioniervorrichtung gebildet wird und/oder
- zumindest eine der Seitenwände zumindest in Teilen aus einer Rückwand oder einer Seitenwand eines Regals der Kommissioniervorrichtung gebildet wird.

In der Vorderseite, der Rückseite und/oder einer der Seitenwände der Kommissioniervorrichtung kann eine Tür oder ein Fenster mit einem beweglichen, in einem Fensterrahmen angeordneten, den Fensterrahmen in einer Schließstellung verschließenden Fensterflügel vorgesehen sein.

Die Vorderseite, die Rückseite und/oder zumindest eine der Seitenwände der Kommissioniervorrichtung kann zumindest in Teilen von einem durchsichtigen Material gebildet sein, so dass ein Einblick von außen in einen Innenraum der Kommissioniervorrichtung möglich ist. Ergänzend oder alternativ kann die Vorderseite, die Rückseite und/oder zumindest eine der Seitenwände der Kommissioniervorrichtung zumindest in Teilen von einem Display, insbesondere bevorzugt einem berührungsempfindlichen Display, gebildet sein. Ein so ausgeführtes Display kann dazu genutzt werden, der Vorderseite, der Rückseite und/oder zumindest einer der Seitenwände eine besondere Erscheinung zu geben (eine besondere Wandfarbe, die sich auch ändern kann, beispielsweise je nach Tageszeit ändern kann) oder aber als Werbefläche genutzt werden. Ein so ausgeführtes Display, insbesondere bevorzugt ein berührungsempfindliches Display kann Teil einer Schnittstelle sein, mit der ein Benutzer mit der Steuerung der Kommissioniervorrichtung interagieren kann.

In einer bevorzugten Ausführungsform weist die Kommissioniervorrichtung ein Dach auf. In einer bevorzugten Ausführungsform liegt das Dach auf dem Regal bzw. auf den Regalen der Kommissioniervorrichtung auf. In einer alternativen Ausführungsform wird das Dach zumindest teilweise durch die Oberseite des Regals bzw. die Oberseiten der Regale gebildet, wobei zusätzlich zumindest ein Deckenelement vorgesehen ist, das den Bereich der Kommissioniervorrichtung, in der sich kein Regal befindet, von oben zumindest teilweise verschließt. Vorzugsweise werden die Bereiche der Kommissioniervorrichtung, in der sich kein Regal befindet, von oben durch ein Deckenelement oder durch mehrere Deckenelemente gänzlich verschlossen. Die Deckenelemente können Luken aufweisen. Die Deckenelemente können als verschlossene Deckenelemente, beispielsweise als Kunststoff-, Metall- oder Holz-Paneele, ausgeführt sein. Die Deckenelemente können aber auch als Gitterelemente ausgeführt sein.

In einer bevorzugten Ausführungsform weist die Kommissioniervorrichtung ein Förderband auf. In einer bevorzugten Ausführungsform führt das Förderband von einem Bereich außerhalb eines Regals in das Regal, vorzugsweise in einen Raum zwischen zwei Regalböden eines Regals. Ein solches Förderband kann dazu genutzt werden, Güter von außerhalb eines Innenraums der Kommissioniervorrichtung in einen Innenraum der Kommissioniervorrichtung zu verbringen. Ein solches Förderband kann dazu genutzt werden, Güter von innerhalb eines Innenraums der Kommissioniervorrichtung in einen Bereich außerhalb dieses Innenraums der Kommissioniervorrichtung zu verbringen. Ein solches Förderband kann auch dazu genutzt werden,
- in einer ersten Betriebsart der Kommissioniervorrichtung (dem "Einlagern") Güter von außerhalb eines Innenraums der Kommissioniervorrichtung in einen Innenraum der Kommissioniervorrichtung zu verbringen und
- in einer zweiten Betriebsart der Kommissioniervorrichtung (dem "Auslagern") Güter von innerhalb eines Innenraums der Kommissioniervorrichtung in einen Bereich außerhalb dieses Innenraums der Kommissioniervorrichtung zu verbringen.

In einer bevorzugten Ausführungsform weist die Kommissioniervorrichtung
- ein erstes Förderband auf, das dazu genutzt wird, Güter von außerhalb eines Innenraums der Kommissioniervorrichtung in einen Innenraum der Kommissioniervorrichtung zu verbringen ("Einlagerungsband") und
- ein zweites Förderband auf, das dazu genutzt wird, Güter von innerhalb eines Innenraums der Kommissioniervorrichtung in einen Bereich außerhalb dieses Innenraum der Kommissioniervorrichtung zu verbringen ("Auslagerungsband").

Ergänzend oder alternativ zu dem Einlagerungsband kann die Kommissioniervorrichtung in dieser Ausführungsform eine Einlagerungsrutsche oder Einlagerungsschubladen aufweisen. Ergänzend oder alternativ zu dem Auslagerungsband kann die Kommissioniervorrichtung in dieser Ausführungsform eine Auslagerungsrutsche oder Auslagerungsschubladen aufweisen. Die Kommissioniervorrichtung kann sowohl als Teil der Einlagerung als auch als Teil der Auslagerung eine Röllchenbahn aufweisen.

Die Kommissioniervorrichtung kann eine Vereinzelung, insbesondere eine Pick & Place Vereinzelung, eine Feeder-Vereinzelung oder eine Vereinzelungseinheit aufweisen.

In einer bevorzugten Ausführungsform weist die Kommissioniervorrichtung einen Umsetzer auf. In einer bevorzugten Ausführungsform ist der Umsetzer ein Backengreifer. In einer bevorzugten Ausführungsform ist der Umsetzer zwischen einer Aufnahmeposition und einer Ablageposition verfahrbar ausgeführt.

In einer bevorzugten Ausführungsform ist der Umsetzer in seiner Aufnahmeposition oberhalb eines Aufgabeplatzes. Der Aufgabeplatz kann eine feste Fläche, beispielsweise eine feste Oberfläche, sein, auf die ein Bediener der Kommissioniervorrichtung ein Gut ablegen kann oder an die das einzulagernde Gut auf anderem Wege gelangt, beispielsweise durch eine Rutsche, an deren Ende die feste Fläche angeordnet ist oder von deren Ende das Gut auf die feste Fläche fällt. Der Aufgabeplatz kann der Boden einer Schublade sein. Der Aufgabeplatz kann ein bestimmter Bereich eines Förderbandes sein. Der Aufgabeplatz kann die Oberfläche eines verfahrbaren Tablars sein. Der Aufgabeplatz kann außerhalb eines Innenraums der Kommissioniervorrichtung angeordnet sein, beispielsweise wenn der Umsetzer im Zuge des Einlagerns der Güter eingesetzt wird. Der Aufgabeplatz kann innerhalb eines Innenraums der Kommissioniervorrichtung angeordnet sein, beispielsweise wenn der Umsetzer im Zuge des Auslagerns der Güter eingesetzt wird.

In einer bevorzugten Ausführungsform ist der Umsetzer in seiner Ablageposition oberhalb eines Ablageplatzes. Der Ablageplatz kann eine feste Fläche, beispielsweise eine feste Oberfläche, sein, von der das Regalbediengerät ein Gut aufgreifen kann. Der Ablageplatz kann ein bestimmter Bereich eines Förderbandes sein. Der Ablageplatz kann die Oberfläche eines verfahrbaren Tablars sein. Der Ablageplatz kann außerhalb eines Innenraums der Kommissioniervorrichtung angeordnet sein, beispielsweise wenn der Umsetzer im Zuge des Auslagerns der Güter eingesetzt wird. Der Ablageplatz kann innerhalb eines Innenraums der Kommissioniervorrichtung angeordnet sein, beispielsweise wenn der Umsetzer im Zuge des Einlagerns der Güter eingesetzt wird.

In einer bevorzugten Ausführungsform weist die Kommissioniervorrichtung eine Identifikationsstation auf, die mindestens eine Identifikationsvorrichtung aufweist, mit der zumindest eine Eigenschaft eines Guts bestimmt werden kann. Die Identifikationsstation kann auch mehrere Identifikationsvorrichtungen aufweisen, insbesondere bevorzugt zumindest zwei Identifikationsvorrichtungen, die jeweils unterschiedliche Eigenschaften des Guts bestimmen. In einer bevorzugten Ausführungsform ist zumindest eine der vorhandenen Identifikationsvorrichtung, insbesondere bevorzugt die Mehrzahl (mehr als 50%) und insbesondere bevorzugt die überwiegende Mehrzahl (mehr als 75%) der vorhandenen Identifikationsvorrichtung zum Datenaustausch mit der Steuerung verbunden, beispielsweise über eine Funkverbindung, wie beispielsweise Bluetooth oder über eine Kabelverbindung.

Eine in einer Identifikationsstation einsetzbare Identifikationsvorrichtung kann ein Laser sein, mit dem zumindest eine Abmessung des Guts bestimmt werden kann.

Eine in einer Identifikationsstation einsetzbare Identifikationsvorrichtung kann ein Barcodeleser und/oder ein QR-Codeleser sein, mit dem zumindest ein Barcode auf dem Gut bestimmt werden kann.

Eine in einer Identifikationsstation einsetzbare Identifikationsvorrichtung kann ein RFID-Lesegerät sein, mit dem ein passiver oder aktiver RFID-Tag des Guts bestimmt werden kann.

Eine in einer Identifikationsstation einsetzbare Identifikationsvorrichtung kann eine Kamera sein, mit der beispielsweise eine bildliche Wiedergabe des Guts aufgenommen werden kann und/oder mit der unter Einsatz von Bildanalyseverfahren zumindest eine Abmessung des Guts bestimmt werden kann und/oder mit der unter Einsatz von Bildanalyseverfahren (OCR-Verfahren) zumindest ein auf dem Gut abgedruckter Text, beispielsweise ein Haltbarkeitsdatum oder eine Beschreibung des Guts bestimmt werden kann.

Eine in einer Identifikationsstation einsetzbare Identifikationsvorrichtung kann eine Temperaturmessvorrichtung sein, mit der zumindest eine Abmessung des Guts bestimmt werden kann.

Eine in einer Identifikationsstation einsetzbare Identifikationsvorrichtung kann eine Waage sein, mit der das Gewicht des Guts bestimmt werden kann.

Eine in einer Identifikationsstation einsetzbare Identifikationsvorrichtung kann eine Röntgenvorrichtung sein, mit der zumindest ein Röntgenbild des Guts gemacht werden kann.

In einer bevorzugten Ausführungsform ist eine Identifikationsstation
- als Teil eines Aufgabeplatzes und/oder
- als Teil eines Ablageplatzes und/oder
- auf dem Weg angeordnet, den ein Umsetzer zwischen einem Aufgabeplatz und einem Ablageplatz zurücklegt, insbesondere in Form eines Zwischenplatzes, auf den der Umsetzer das Gut zur Identifikation kurzzeitig ablegt.

Die Identifikationsstation kann zur Identifikation zumindest einer Eigenschaft eines Gutes während des Einlagerns des Guts verwendet werden. Die Identifikationsstation kann zur Identifikation zumindest einer Eigenschaft eines Gutes während des Auslagerns des Guts verwendet werden. Ein und dieselbe Identifikationsstation kann zur Identifikation zumindest einer Eigenschaft eines Gutes während des Einlagerns des Guts und zur Identifikation zumindest einer Eigenschaft eines Gutes während des Auslagerns des Guts verwendet werden. In einer bevorzugten Ausführungsform weist die Kommissioniervorrichtung
- eine erste Identifikationsstation zur Identifikation zumindest einer Eigenschaft eines Gutes während des Einlagerns des Guts und
- eine zweite Identifikationsstation zur Identifikation zumindest einer Eigenschaft eines Gutes während des Auslagerns des Guts
auf.

In einer bevorzugten Ausführungsform weist die Kommissioniervorrichtung eine Aufgabe auf, die durch einen außerhalb eines Innenraums der Kommissioniervorrichtung angeordneten, für einen Bediener der Kommissioniervorrichtung zugänglichen Ort gebildet wird. Die Aufgabe kann der Aufgabeplatz sein, oberhalb dessen sich ein Umsetzer in seiner Aufnahmeposition befinden kann. In einer alternativen Ausführungsform ist ein Fördermittel, beispielsweise ein Förderband, eine Rutsche oder verfahrbares Tablar oder eine Hintereinanderschaltung von Fördermitteln, beispielsweise
- mehrere hintereinandergeschaltete Förderbänder oder
- eine Rutsche, insbesondere Wendelrutsche, oder eine Wendelrutsche, Röllchenbahn mit einem nachgeschalteten Förderband, auf das ein Gut von der Rutsche bzw. der Röllchenbahn fällt oder
- ein Förderband mit einer Rutsche, in die ein von dem Förderband gefördertes Gut am Ende des Förderbands fällt,
vorgesehen, mit dem bzw. mittels denen das Gut von der Aufgabe zum Aufgabeplatz befördert wird.

In einer bevorzugten Ausführungsform weist die Kommissioniervorrichtung einen Übergabeplatz auf, von dem ein Regalbediengerät ein Gut aufnehmen kann. Der Übergabeplatz kann der Ablageplatz sein, oberhalb dessen sich ein Umsetzer in seiner Ablageposition befindet. In einer alternativen Ausführungsform ist ein Fördermittel, beispielsweise ein Förderband, eine Rutsche, insbesondere Wendelrutsche oder verfahrbares Tablar oder eine Hintereinanderschaltung von Fördermitteln, beispielsweise
- mehrere hintereinandergeschaltete Förderbänder oder
- eine Rutsche, insbesondere Wendelrutsche mit einem nachgeschalteten Förderband, auf das ein Gut von der Rutsche fällt oder
- ein Förderband mit einer Rutsche, in die ein von dem Förderband gefördertes Gut am Ende des Förderbands fällt,
vorgesehen, mit dem bzw. mittels denen das Gut von dem Ablageplatz zum Übergabeplatz befördert wird.

In einer bevorzugten Ausführungsform weist die Kommissioniervorrichtung zwischen der Aufgabe und dem Übergabeplatz einen Aufgabeförderweg auf, entlang dessen das Gut von der Aufgabe zum Übergabeplatz bewegt wird, wobei die Route des Aufgabeförderwegs durch ein einziges Fördermittel, beispielsweise ein Förderband, eine Rutsche oder verfahrbares Tablar oder eine Hintereinanderschaltung von Fördermitteln, beispielsweise
- mehrere hintereinandergeschaltete Förderbänder oder
- eine Rutsche, insbesondere Wendelrutsche mit einem nachgeschalteten Förderband, auf das ein Gut von der Rutsche fällt oder
- ein Förderband mit einer Rutsche, in die ein von dem Förderband gefördertes Gut am Ende des Förderbands fällt,
festgelegt wird. In einer bevorzugten Ausführungsform ist das Fördermittel der Umsetzer. In einer alternativen, ebenfalls bevorzugten Ausführungsform ist der Umsetzer eines der Fördermittel, die zur Bildung des Aufgabeförderwegs hintereinander geschaltet sind. In einer alternativen, ebenfalls bevorzugten Ausführungsform ist der Umsetzer keines der Fördermittel, die zur Bildung des Aufgabeförderwegs hintereinander geschaltet werden; in dieser Ausführungsform wird das Gut also ohne Umsetzer von der Aufgabe zum Übergabeplatz entlang des Aufgabeförderwegs transportiert.

In einer bevorzugten Ausführungsform ist eine Identifikationsstation
- als Teil der Aufgabe und/oder
- als Teil des Übergabeplatzes und/oder
- entlang des Aufgabeförderweg angeordnet.

In einer bevorzugten Ausführungsform weist die Kommissioniervorrichtung eine Ausgabe auf, die durch einen außerhalb eines Innenraums der Kommissioniervorrichtung angeordneten, für einen Bediener der Kommissioniervorrichtung zugänglichen Ort gebildet wird. Die Ausgabe kann der Ablageplatz sein, oberhalb dessen sich ein Umsetzer in seiner Ablageposition befinden kann. In einer alternativen Ausführungsform ist ein Fördermittel, beispielsweise ein Förderband, eine Rutsche oder verfahrbares Tablar oder eine Hintereinanderschaltung von Fördermitteln, beispielsweise
- mehrere hintereinandergeschaltete Förderbänder oder
- eine Rutsche mit einem nachgeschalteten Förderband, auf das ein Gut von der Rutsch fällt oder
- ein Förderband mit einer Rutsche, in die ein von dem Förderband gefördertes Gut am Ende des Förderbands fällt,
vorgesehen, mit dem bzw. mittels denen das Gut von dem Ablageplatz zur Ausgabe befördert wird.

In einer bevorzugten Ausführungsform weist die Komissioniervorrichtung einen Übergabeplatz auf, an dem ein Regalbediengerät ein Gut ablegen kann. Der Übergabeplatz kann der gleiche Platz sein, von dem ein Regalbediengerät ein Gut aufnehmen kann. In einer bevorzugten Ausführungsform weist die Kommissioniervorrichtung einen ersten Übergabeplatz auf, der dazu vorgesehen ist, dass ein Regalbediengerät von ihm ein Gut aufnehmen soll, und einen zweiten Übergabeplatz, der dazu vorgesehen ist, dass ein Regalbediengerät ein Gut an ihm ablegen soll. Der hier in Rede stehende, ggf. zweite Übergabeplatz kann der Aufnahmeplatz sein, oberhalb dessen sich ein Umsetzer in seiner Aufnahme befindet. In einer alternativen Ausführungsform ist ein Fördermittel, beispielsweise ein Förderband, eine Rutsche oder verfahrbares Tablar oder eine Hintereinanderschaltung von Fördermitteln, beispielsweise
- mehrere hintereinandergeschaltete Förderbänder oder
- eine Rutsche mit einem nachgeschalteten Förderband, auf das ein Gut von der Rutsch fällt oder
- ein Förderband mit einer Rutsche, in die ein von dem Förderband gefördertes Gut am Ende des Förderbands fällt,
vorgesehen, mit dem bzw. mittels denen das Gut von dem hier in Rede stehenden, ggf. zweiten Übergabeplatz zum Aufnahmeplatz befördert wird.

In einer bevorzugten Ausführungsform weist die Kommissioniervorrichtung zwischen dem Übergabeplatz und der Ausgabe einen Ausgabeförderweg auf, entlang dessen das Gut von dem Übergabeplatz zur Ausgabe bewegt wird, wobei die Route des Ausgabeförderwegs durch ein einziges Fördermittel, beispielsweise ein Förderband, eine Rutsche oder verfahrbares Tablar oder eine Hintereinanderschaltung von Fördermitteln, beispielsweise
- mehrere hintereinandergeschaltete Förderbänder oder
- eine Rutsche mit einem nachgeschalteten Förderband, auf das ein Gut von der Rutsch fällt oder
- ein Förderband mit einer Rutsche, in die ein von dem Förderband gefördertes Gut am Ende des Förderbands fällt,
festgelegt wird. In einer bevorzugten Ausführungsform ist das Fördermittel der Umsetzer. In einer alternativen, ebenfalls bevorzugten Ausführungsform ist der Umsetzer eines der Fördermittel, die zur Bildung des Ausgabeförderwegs hintereinander geschaltet sind. In einer alternativen, ebenfalls bevorzugten Ausführungsform ist der Umsetzer keines der Fördermittel, die zur Bildung des Ausgabeförderwegs hintereinander geschaltet werden; in dieser Ausführungsform wird das Gut also ohne Umsetzer von dem Übergabeplatz zur Ausgabe entlang des Ausgabeförderwegs transportiert.

In einer bevorzugten Ausführungsform ist eine Identifikationsstation
- als Teil der Ausgabe und/oder
- als Teil des Übergabeplatzes und/oder
- entlang des Ausgabeförderweg angeordnet.

In einer bevorzugten Ausführungsform entspricht die Route des Ausgabeförderwegs der des Aufgabeförderwegs. In einer alternativen Ausführungsform entspricht ein Teil der Route des Ausgabeförderwegs der Route des Aufgabeförderwegs oder einem Teil der Route des Aufgabeförderwegs. In einer alternativen Ausführungsform entspricht ein Teil der Route des Aufgabeförderwegs der Route des Ausgabeförderwegs oder einem Teil der Route des Ausgabeförderwegs. In einer alternativen Ausführungsform sind die Route des Ausgabeförderwegs und die Route des Aufgabeförderwegs unterschiedlich.

In einer bevorzugten Ausführungsform weist die Kommissioniervorrichtung eine Benutzerschnittstelle auf. Die Benutzerschnittstelle ermöglicht es dem Benutzer mit der Steuerung der Kommissioniervorrichtung zu interagieren. Die Benutzerschnittstelle kann
- eine Tastatur und/oder
- eine Computermaus oder ein Touchpad und/oder
- ein berührungsempfindliches Display und/oder
- ein Mikrofon für eine Sprachsteuerung und/oder
- ein Anschluss für das Auslesen eines Speichermediums, beispielsweise eines USB-Stick, einer CD, einer DVD und/oder
- ein Lesegerät zum Auslesen eines RFID-tag oder eine Antenne für eine Kommunikation nach einem Funkstandard, beispielsweise Bluetooth oder NFC,
sein, die als Teil der Kommissioniervorrichtung ausgeführt sind und insbesondere drahtlos, beispielsweise über Bluetooth, oder über Kabel mit der Steuerung der Kommissioniervorrichtung verbunden sind. Ergänzend oder alternativ kann die Benutzerschnittstelle eine WLAN- oder LAN-Schnittstelle oder eine Schnittstelle für ein Telefonnetzwerk oder eine Schnittstelle für das Internet, beispielsweise ein Router, sein, mit der der Nutzer über ein Netzwerk, beispielsweise ein Telefonnetzwerk oder ein Computernetzwerk, insbesondere ein WLAN, ein LAN oder über das Internet, mit der Steuerung der Kommissioniervorrichtung interagieren kann.

In einer bevorzugten Ausführungsform weist die Kommissioniervorrichtung eine Klimavorrichtung auf, mit der zumindest ein Teil eines Innenraums der Kommissioniervorrichtung geheizt oder gekühlt werden kann. In einer bevorzugten Ausführungsform, bei der durch Trennwände in einem Regal eine Zone gebildet werden kann, kann die Klimavorrichtung so ausgeführt werden, dass sie durch Heizen und/oder Kühlen die Temperatur in der Zone beeinflussen und insbesondere bevorzugt in einen vorher festgelegten Temperaturbereich und insbesondere bei einer bestimmten Temperatur halten kann. Beispielsweise kann eine Zone zur Aufnahme von gekühlten Waren auf einen Temperaturbereich von 3°C bis 7°C gehalten werden. In einer bevorzugten Ausführungsform, in der mittels einer Klimavorrichtung die Temperatur in einer durch Trennwände abgegrenzten Zone beeinflusst wird, sind in einer besonders bevorzugten Ausführungsform die Trennwände mit einer Isolierung ausgeführt. Ebenso ist es möglich, mittels der Klimavorrichtung zu verhindern, dass die Temperatur im gesamten Innenraum der Kommissioniervorrichtung über einen bestimmten Wert steigt, beispielsweise über 35°C steigt.

In einer bevorzugten Ausführungsform weist die Kommissioniervorrichtung eine Beleuchtung auf, mit der ein Innenraum der Kommissioniervorrichtung zumindest teilweise beleuchtet werden kann. Die Beleuchtung kann dazu verwendet werden, einen Teil des Innenraums vor einem Regal bzw. zwischen mehreren Regalen zu erhellen. Eine Beleuchtung kann auch zur Akzentuierung verwendet, beispielsweise kann jeder Regalboden mit einer Beleuchtung ausgestattet sein, die beispielsweise so gesteuert werden kann, dass die Beleuchtung leuchtet, wenn in diesem Regalboden ein Gut mittels des Regalbediengeräts eingelagert wird oder aus diesem Regalboden mittels des Regalbediengeräts ein Gut ausgelagert wird.

In einer bevorzugten Ausführungsform kann ein Regal der Kommissioniervorrichtung beweglich ausgeführt sein und insbesondere bevorzugt innerhalb der Kommissioniervorrichtung in verschiedene Positionen bewegt werden. Zur besseren Raumnutzung kann bei beweglichen Regalen beispielsweise der Abstand zwischen zwei Regalen verringert werden, wenn zu dem jeweiligen Zeitpunkt nicht auf ein Gut zugegriffen werden muss, das sich in einem der zwei Regale befindet. In einer alternativen Ausführungsform sind alle Regale der Kommissioniervorrichtung ortsfest und unbeweglich angeordnet.

In einer bevorzugten Ausführungsform weist die Kommissioniervorrichtung einen Innenraum auf. In einer bevorzugten Ausführungsform weist die Kommissioniervorrichtung eine Vorderseite, eine Rückseite und zwei Seitenwände und ein Dach auf, wobei in dieser Ausführungsform der Innenraum der Raum ist, der durch die Vorderseite, die Rückseite und die zwei Seitenwände sowie den Fußboden, auf der die Kommissioniervorrichtung steht bzw. eine ggf. vorhandene Bodenfläche der Kommissioniervorrichtung und das Dach begrenzt wird. Weist die Kommissioniervorrichtung kein eigenes Dach auf, aber eine Vorderseite, eine Rückseite und zwei Seitenwände, so ist in dieser Ausführungsform der Innenraum der Raum, der durch die Vorderseite, die Rückseite und die zwei Seitenwände sowie den Fußboden, auf der die Kommissioniervorrichtung steht bzw. eine ggf. vorhandene Bodenfläche der Kommissioniervorrichtung und die horizontale Ebene begrenzt wird, die den höchsten Punkt der Kommissioniervorrichtung enthält.

In einer bevorzugten Ausführungsform weist das Regalbediengerät einen Manipulator auf. Unter einem Manipulator wird eine Vorrichtung verstanden, die die Lage und/oder Ausrichtung eines Guts im Raum verändern kann. Eine Veränderung der Lage bedeutet, dass ein Gut von einem ersten Ort an einen zweiten Ort verbracht wird. Eine Änderung der Ausrichtung bedeutet, dass ein Gut am gleichen Ort verbleibt, aber an diesem Ort anders ausgerichtet wird, beispielsweise um eine Achse gedreht wird.

Ein Manipulator kann mittels
- Formschluss und/oder
- Reibschluss und/oder
- Magnetkraft und/oder
- Saugkraft und/oder
- Adhäsion
die Lage und/oder Ausrichtung des Guts verändern.

In einer bevorzugten Ausführungsform weist der Manipulator einen Schieber auf, wobei unter einem Schieber eine Vorrichtung verstanden wird, die eine Schubkraft auf das Gut ausüben kann, aber keine Zugkraft.

In einer bevorzugten Ausführungsform weist der Manipulator einen Haken, insbesondere mehrere Haken oder Krallen auf, wobei unter einem Haken eine Vorrichtung verstanden wird, die einen Rücksprung aufweist, mittels dem ein zumindest Teil des Guts hintergriffen werden kann und eine Zugkraft auf das Gut aufgebracht werden kann.

In einer bevorzugten Ausführungsform weist der Manipulator einen Sauger auf, wobei unter einem Sauger eine Vorrichtung verstanden wird, die eine Saugkraft auf das Gut aufbringen kann und insbesondere bevorzugt durch das Aufbringen einer Saugkraft das Gut in einer Relativposition zum Sauger halten kann, sodass durch das Bewegen des Saugers auch das Gut bewegt werden kann, beispielsweise durch eine Bewegung des Saugers auf das an dem Sauger mittels Saugkraft gehaltenen Gut eine Zugbewegung aufgebracht werden kann.

In einer bevorzugten Ausführungsform weist der Manipulator einen bewegbaren Magneten auf, wobei das Gut durch die Magnetkraft an dem Magneten gehalten werden kann und somit eine Bewegung des Magneten auf das Gut übertragen werden kann.

In einer bevorzugten Ausführungsform weist der Manipulator einen Greifer auf. Ein Greifer weist mindestens zwei Greifelemente auf, wobei mindestens das eine Greifelement relativ zum anderen Greifelement bewegt werden kann, sodass der Abstand zwischen dem ersten Greifelement und dem zweiten Greifelement verändert werden kann. Der Greifer kann beispielsweise nach Art einer Zange funktionieren. Es sind Ausführungsformen möglich, bei denen die Lage des einen Greifelements innerhalb des Manipulators fixiert ist und die Änderung des Abstands zwischen dem einen Greifelement und dem anderen Greifelement allein durch Bewegungen des einen Greifelements herbeigeführt wird. In einer besonders bevorzugten Ausführungsform können jedoch beide Greifelemente relativ zu dem jeweils anderen Greifelement bewegt werden, sodass durch Bewegungen beider Greifelemente der Abstand zwischen den Greifelementen verändert werden kann.

In einer bevorzugten Ausführungsform weist das Regalbediengerät eine Stützplattform auf. In einer bevorzugten Ausführungsform ist der Manipulator oberhalb der Stützplattform angeordnet. In einer bevorzugten Ausführungsform kann der Manipulator oder ein zum Manipulator gehörendes Teil des Manipulators relativ zur Stützplattform bewegt werden. Ist der Manipulator beispielsweise als Greifer ausgeführt, so kann der Manipulator ein auf der Stützplattform liegendes Gut greifen und durch seine Bewegung relativ zur Stützplattform das Gut von der Stützplattform in das Regal einlagern. Durch eine Bewegung des Manipulators oder Teil des Manipulators relativ zur Stützplattform können Güter aus dem Regal ausgelagert werden. Hierzu wird der Manipulator oder der Teil des Manipulators relativ zur Stützplattform in das Regal bewegt, wo er das auszulagernde Gut beispielsweise ergreift oder eine Zugkraft auf das auszulagernde Gut ausgeübt und das auszulagernde Gut aus dem Regal auf die Stützplattform holt.

In einer bevorzugten Ausführungsform weist das Regalbediengerät einen Grundkörper auf. In einer bevorzugten Ausführungsform ist der Manipulator relativ zum Grundkörper beweglich ausgeführt. In einer bevorzugten Ausführungsform ist eine Stützplattform, soweit sie vorhanden ist, relativ zum Grundkörper beweglich ausgeführt. In einer bevorzugten Ausführungsform sind der Manipulator und/oder die Stützplattform in eine Vertikalrichtung relativ zum bewegten Grundkörper beweglich ausgeführt. In einer bevorzugten Ausführungsform sind der Manipulator und die Stützplattform Teil einer Baugruppe, die gesamthaft relativ zum Grundkörper bewegt werden kann.

In einer bevorzugten Ausführungsform wird der Grundkörper zumindest zum Teil von einer Säule, insbesondere bevorzugt einer vertikalen Säule gebildet.

In einer bevorzugten Ausführungsform weist der Grundkörper, insbesondere bevorzugt eine einen Teil des Grundkörpers bildende Säule eine Schiene auf, wobei der Manipulator in seiner Bewegung relativ zum Grundkörper, bzw. eine den Manipulator aufweisende Baugruppe in ihrer Bewegung relativ zum Grundkörper durch die Schiene geführt wird.

Die Bewegung des Manipulators, bzw. einer den Manipulator aufweisenden Baugruppe relativ zum Grundkörper kann
- durch einen hydraulischen und/oder einen pneumatischen Zylinder erfolgen, der an einem Ende mit dem Grundkörper und an seinem anderen Ende mit dem Manipulator bzw. der Baugruppe verbunden ist, und/oder
- durch eine Zahnstange und ein angetriebenes Ritzel, wobei beispielsweise die Zahnstange am Grundkörper angeordnet sein kann und der Manipulator bzw. die Baugruppe ein angetriebenes Ritzel aufweist, durch dessen Bewegung sich der Manipulator bzw. die Baugruppe entlang der Zahnstange bewegen kann, und/oder
- nach Art einer Magnetschwebebahn erfolgen und/oder
- durch ein Seil oder einen Gurt oder Zahnriemen erfolgen, der an einem Ende mit dem Manipulator, bzw. der Baugruppe verbunden ist und auf eine Winde am Grundkörper auf- oder abgewickelt wird oder der an einem Ende mit dem Grundkörper verbunden ist und auf eine Winde am Manipulator bzw. der Baugruppe auf- oder abgewickelt wird, und/oder
- durch eine Schlaufe eines Zahngurts, bzw. Zahnriemen, mit dem der Manipulator, bzw. die Baugruppe verbunden ist, erfolgen, wobei der Zahngurt im Eingriff mit mindestens einem Ritzeln am Grundkörper steht und durch Bewegen des Zahngurts, beispielsweise durch Antreiben des Ritzels, der Manipulator bzw. die Baugruppe relativ zum Grundkörper bewegt werden kann, und/oder
- durch eine Kugelumlaufspindel erfolgen und/oder
- ein angetriebenes Reibrad, das entlang einer Reibfläche läuft, beispielsweise ein am Manipulator bzw. der Baugruppe vorgesehenes, angetriebenes Reibrad, das entlang einer Reibfläche am Grundkörper läuft.

In einer bevorzugten Ausführungsform weist das Regalbediengerät ein Zustandsbestimmungssystem auf. Das Zustandsbestimmungssystem kann aus einzelnen Modulen zusammengesetzt sein. Das Zustandsbestimmungssystem kann
- die Lage des Manipulators und/oder die Lage einer ggf. vorgesehenen Baugruppe, zu der der Manipulator ein Teil ist, relativ zum Grundkörper bestimmen,
- die Lage des Manipulators oder eines Teils des Manipulator, beispielsweise eines Greifarms, relativ zu anderen Teilen einer Baugruppe, zu der er gehört, beispielsweise relativ zu einer Stützplattform bestimmen,
- die Lage eines Teils des Manipulators relativ zu einem anderen Teil des Manipulators bestimmen, beispielsweise die Lage eines Greifarms relativ zu einem anderen Greifarm,
- die Lage des Regalbediengeräts oder eines Teils des Regalbediengeräts relativ zu anderen Teilen der Kommissioniervorrichtung bestimmen, beispielsweise die Positionierung des Grundkörpers relativ zu einem Referenzpunkt der Kommissioniervorrichtung oder aber die Lage des zum Regalbediengerät zugehörigen Manipulators relativ zu einem Referenzpunkt an einem Regal der Kommissioniervorrichtung.

Als Lage eines Objekts relativ zu einem anderen Objekt wird insbesondere der Abstand eines Referenzpunkts des einen Objekts relativ zu einem Referenzpunkt des anderen Objekts und/oder der Winkel, um den das eine Objekt ausgehend von einer Referenzlage um eine Rotationsachse relativ zu dem anderen Objekt gedreht wurde, verstanden.

Das Zustandsbestimmungssystem kann zum Bestimmen der Lagen Messvorrichtungen enthalten, beispielsweise
- eine Lasermessvorrichtung, mit der ein Abstand gemessen werden kann,
- einen Winkelmessgeber, mit dem gemessen werden kann, um welchen Winkel sich ein Objekt gedreht hat,
- ein Lichtschranke, mit der kontrolliert werden kann, ob ein Objekt einen bestimmten Referenzpunkt erreicht hat, oder mit der kontrolliet werden kann, ob ein Objekt einen bestimmten Referenzpunkt passiert hat,
- einen Drucksensor, mit dem ermittelt werden kann, ob ein Objekt gegen ein anderes Objekt anstößt,
- eine Visionkamera,
- ein Wegmesssystem,
- einen Ultraschallsensor,
- einen Laser-Triangulationssensor,
- einen Seilzugsensor.

In einer bevorzugten Ausführungsform kann das Regalbediengerät relativ zum Regal bewegt werden. In einer bevorzugten Ausführungsform wird das Regalbediengerät entlang eines festgelegten Wegs relativ zum Regal bewegt. In einer bevorzugten Ausführungsform ist das Regalbediengerät an einer Schiene geführt. In einer bevorzugten Ausführungsform ist ein Grundkörper des Regalbediengeräts an einer Schiene geführt. In einer bevorzugten Ausführungsform wird das Regalbediengerät an einer oberen Schiene und an einer unteren Schiene geführt. In einer bevorzugten Ausführungsform verläuft eine Schiene parallel zu einem Regal.

Die Bewegung des Grundkörpers des Regalbediengeräts relativ zum Regal kann
- durch einen hydraulischen und/oder einen pneumatischen Zylinder erfolgen, der an einem Ende mit dem Grundkörper und an seinem anderen Ende mit dem Regal verbunden ist, und/oder
- durch eine Zahnstange und ein angetriebenes Ritzel, wobei beispielsweise die Zahnstange am Regal angeordnet sein kann und der Grundkörper ein angetriebenes Ritzel aufweist, durch dessen Bewegung sich der Grundkörper entlang der Zahnstange bewegen kann, und/oder
- nach Art einer Magnetschwebebahn erfolgen und/oder
- durch ein Seil oder einen Gurt oder Zahnriemen erfolgen, der an einem Ende mit dem Regal verbunden ist und auf eine Winde am Grundkörper auf- oder abgewickelt wird oder der an einem Ende mit dem Grundkörper verbunden ist und auf eine Winde am Regal auf- oder abgewickelt wird, und/oder
- durch eine Schlaufe eines Zahngurts, bzw. Zahnriemen, mit dem das Regal verbunden ist, erfolgen, wobei der Zahngurt im Eingriff mit mindestens einem Ritzeln am Grundkörper steht und durch Bewegen des Zahngurts oder der Ritzels, beispielsweise durch Antreiben des Ritzels, der Grundkörper relativ zum Regal bewegt werden kann, und/oder
- durch eine Kugelumlaufspindel erfolgen und/oder
- ein angetriebenes Reibrad, das entlang einer Reibfläche läuft, beispielsweise ein am Grundkörper vorgesehenes, angetriebenes Reibrad, das entlang einer Reibfläche am Regal oder an dem Boden vor dem Regal läuft.

Das erfindungsgemäße Verfahren sieht vor, dass
- ein Gut, das vorher nicht an einem bestimmten Lagerplatz in einem Regal der Kommissioniervorrichtung positioniert war, mittels des Regalbediengeräts an diesen bestimmten Lagerplatz in dem Regal positioniert wird,
   oder
- ein Gut, das vorher an einem bestimmten Lagerplatz in einem Regal der Kommissioniervorrichtung positioniert war, mittels des Regalbediengeräts von diesem bestimmten Lagerplatz entfernt wird.

In einer bevorzugten Ausführungsform wird ein an einem bestimmten Lagerplatz in dem Regal einzulagerndes Gut in einem vorgelagerten Verfahrensschritt
- von dem Manipulator gehalten und/oder liegt auf einer Stützplattform eines Regalbediengeräts und wird mit dem Regalbediengerät relativ zum Regal bewegt und/oder durch eine Bewegung des Manipulators bzw. einer den Manipulator umfassenden Baugruppe relativ zu einem Grundkörper des Regalbediengeräts relativ zum Regal in eine Übergabeposition bewegt und
- nach Erreichen der Übergabeposition durch eine Bewegung des Manipulators oder eines Teils des Manipulators an den bestimmten Lagerplatz bewegt.

In einer bevorzugten Ausführungsform wird ein von einem bestimmten Lagerplatz in dem Regal auszulagerndes Gut
- durch eine Bewegung des Manipulators oder eines Teils des Manipulators von dem bestimmten Lagerplatz entfernt und
- mit dem Regalbediengerät relativ zum Regal bewegt und/oder durch eine Bewegung des Manipulators bzw. einer den Manipulator umfassenden Baugruppe relativ zu einem Grundkörper des Regalbediengeräts relativ zum Regal in eine Übergabeposition bewegt, während das Gut von dem Manipulator gehalten wird und/oder auf einer Stützplattform eines Regalbediengeräts liegt.

Die erfindungsgemäße Kommissioniervorrichtung und/oder das erfindungsgemäße Verfahren werden insbesondere bevorzugt dafür verwendet, Güter deren Länge zwischen 10 und 400mm liegt und oder dessen Breite zwischen 10 und 300mm liegt und/oder dessen Höhe zwischen 10 und 200mm liegt, ein und/oder auszulagern.

Die erfindungsgemäße Kommissioniervorrichtung und/oder das erfindungsgemäße Verfahren werden insbesondere bevorzugt dafür verwendet, Güter, die nicht formstabil sind, beispielsweise Säcke oder Tüten ein und/oder auszulagern.

Nachfolgend wird die Erfindung anhand einer lediglich Ausführungsformen der Erfindung näher darstellenden Zeichnung näher erläutert. Dabei zeigen:

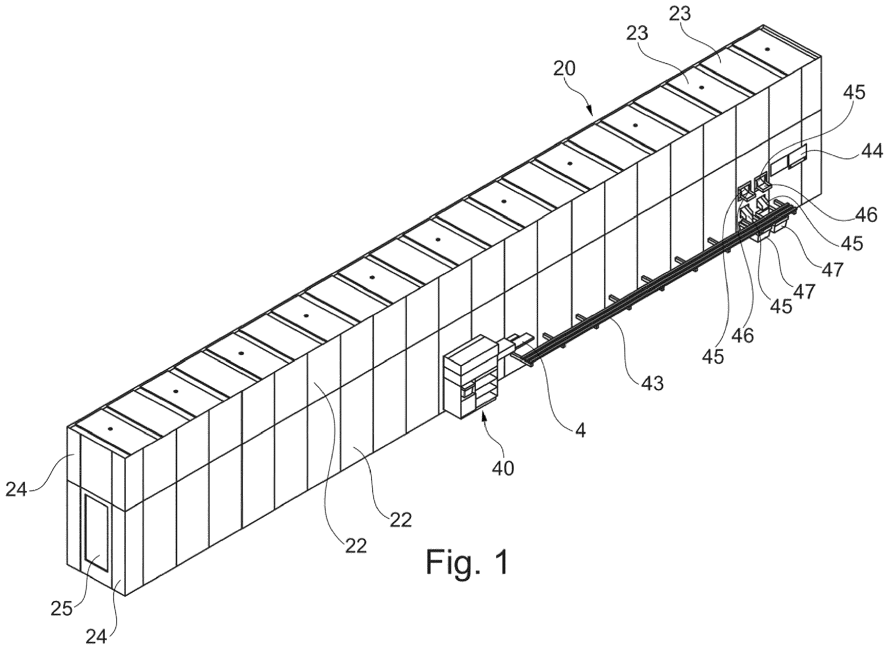

- Fig. 1: eine perspektivische Ansicht auf die sogenannte Einlagerseite einer erfindungsgemäßen Kommissioniervorrichtung;
- Fig. 2: eine perspektivische Ansicht auf die Rückseite der Kommissioniervorrichtung nach Fig. 1;

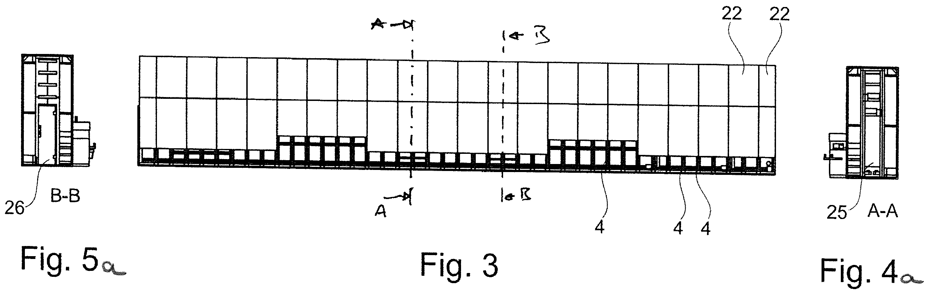

- Fig. 3: eine Draufsicht auf die Rückseite der Kommissioniervorrichtung nach Fig. 1;

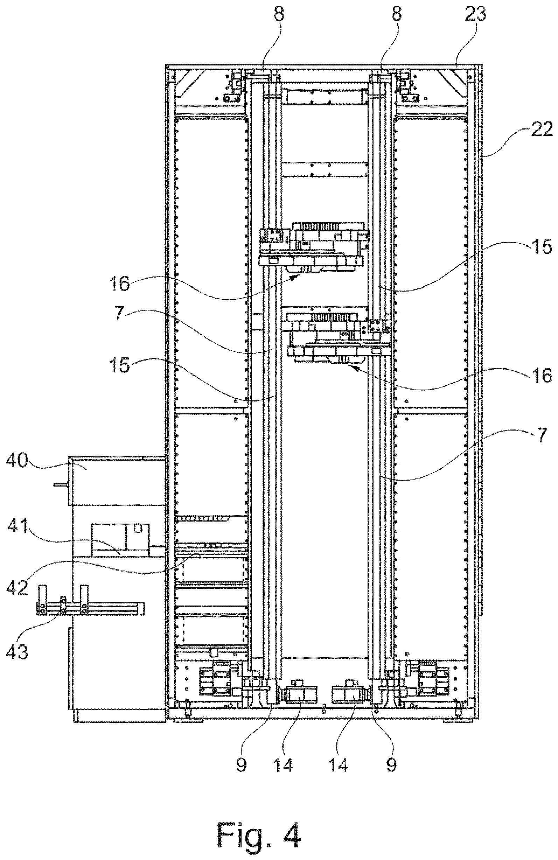

- Fig. 4,4a: eine geschnittene Ansicht der Kommissioniervorrichtung nach Fig. 1 entlang der Linie A-A in Fig. 3;

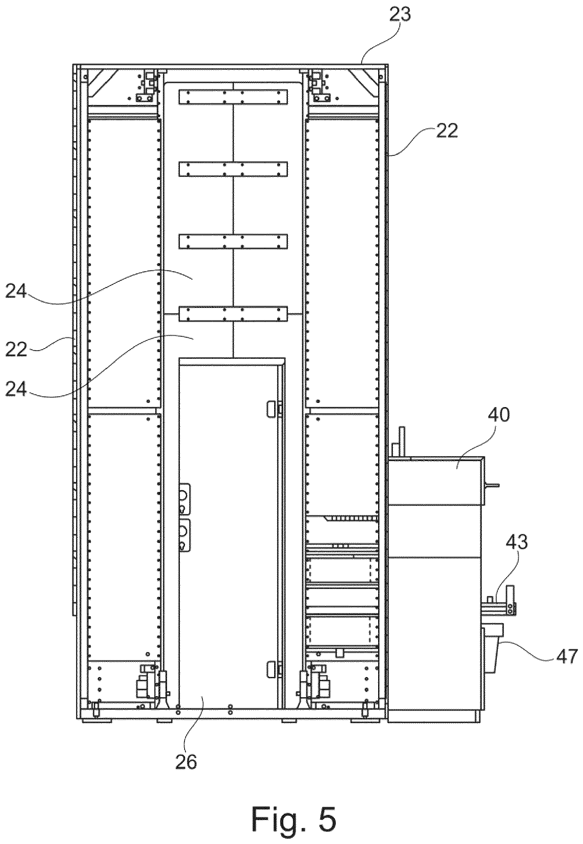

- Fig. 5,5a: eine geschnittene Ansicht der Kommissioniervorrichtung nach Fig. 1 entlang der Linie B-B in Fig. 3;

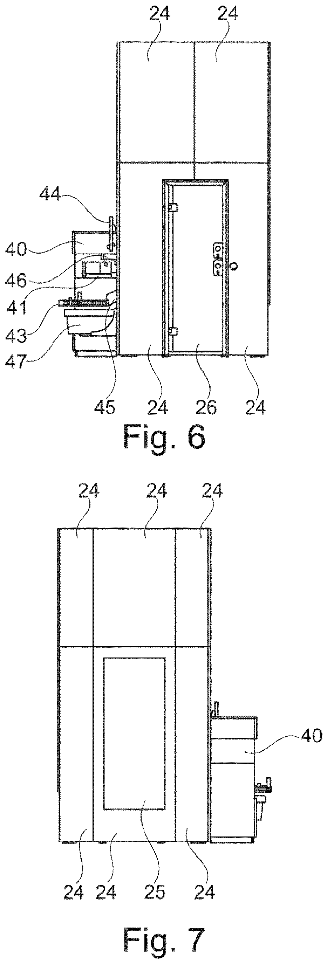

- Fig. 6: eine Draufsicht auf eine erste Seite der Kommissioniervorrichtung nach Fig. 1;
- Fig. 7: eine Draufsicht auf eine zweite Seite der Kommissioniervorrichtung nach Fig. 1;

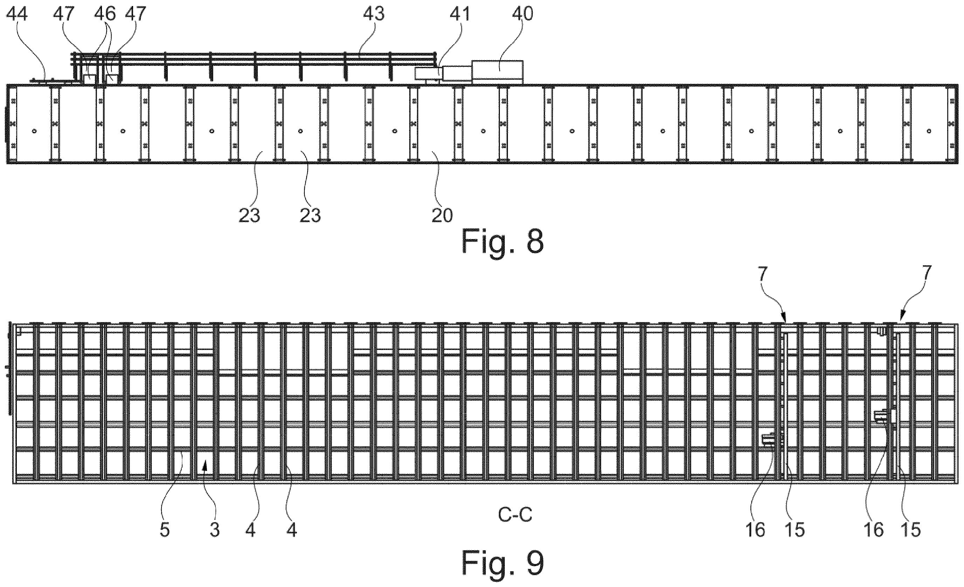

- Fig. 8: eine Ansicht von oben auf die Kommissioniervorrichtung nach Fig. 1;
- Fig. 9: eine geschnittene Ansicht der Kommissioniervorrichtung nach Fig. 1 entlang der Linie C-C in Fig. 8;

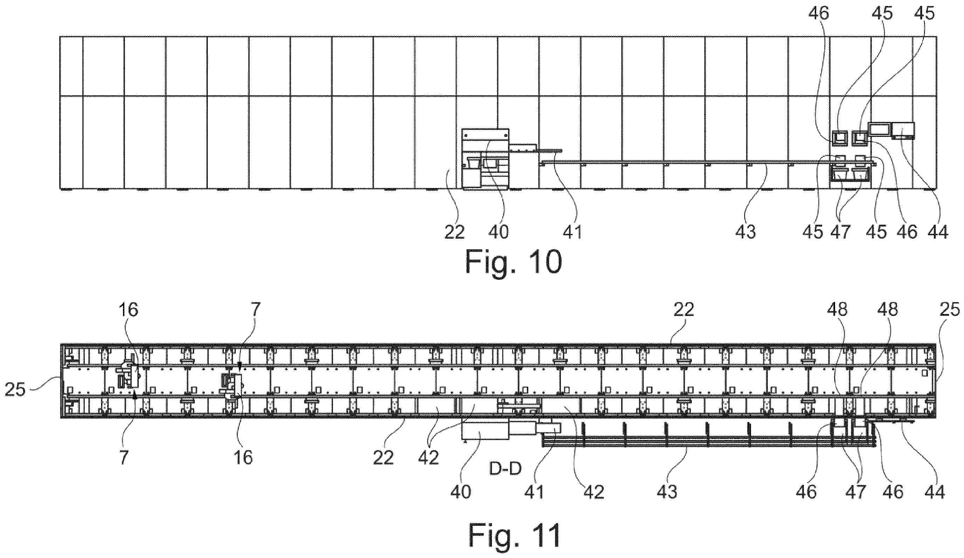

- Fig. 10: eine Draufsicht auf die Einlagerseite der Kommissioniervorrichtung nach Fig. 1;
- Fig. 11: eine geschnittene Ansicht der Kommissioniervorrichtung nach Fig. 1 entlang der Linie D-D in Fig. 10;
- Fig. 12: eine perspektivische Ansicht eines Regalbediengeräts der Kommissioniervorrichtung gemäß Fig. 1 mit einem ersten Typ eines Manipulators;
- Fig. 13: eine perspektivische Ansicht eines Regalbediengeräts der Kommissioniervorrichtung gemäß Fig. 1 mit einem zweiten Typ eines Manipulators;
- Fig. 14: eine perspektivische Ansicht eines ersten Typs eines Manipulators eines Regalbediengeräts der Kommissioniervorrichtung gemäß Fig. 1 und
- Fig. 15: eine perspektivische Ansicht eines zweiten Typs eines Manipulators eines Regalbediengeräts der Kommissioniervorrichtung gemäß Fig. 1.

Die in den Fig. dargestellte Kommissioniervorrichtung 1 weist zwei einander gegenüberliegende Regalzeilen 2 auf. Jede Regalzeile 2 besteht aus einer Vielzahl einzelner Regalmodule 3. Jedes Regalmodul 3 weist vertikale Streben 4 und zwischen den Streben 4 angeordnete, an diesen befestigte Regalböden 5 auf. Aus Gründen der Übersicht sind die Regalmodule 3 mit einer geringen Anzahl von Regalböden 5 dargestellt. Je nach Größe des zu lagernden Guts kann die Anzahl der Regalböden 5 angepasst werden. Beim Lagern von flachen Gütern, beispielsweise von Packungen der Größe einer Arzneimittelpackung, sind geringer Abstände zwischen den Regalböden 5 nötig, als beim Einlagern von hohen Gütern, wie beispielsweise Flaschen. Somit kann bei einem Regalmodul 3, das zum Lagern von flachen Gütern vorgesehen ist, die Zahl der Regalböden 5 erhöht werden, da diese in geringerem Abstand übereinander angeordnet werden können, als dies für ein Regalmodul 3 für das Lagern von hohen Gütern der Fall ist. Innerhalb der Kommissioniervorrichtung 1 kann das Muster der in den Regalmodulen 3 vorgesehenen Regalböden variieren. So können einzelne Regalmodule 3 oder sogar einzelne Bereiche einzelner Regalmodule 3 für das Lagern bestimmter Güter vorgehalten werden und entsprechend ausgestattet sein. So sind Bereiche der Regalzeilen 2 denkbar, innerhalb derer die Regalböden 5 relativ nah übereinander angeordnet sind; diese Bereiche werden dann zum Lagern flacher Güter verwendet. Ebenso sind Bereiche der Regalzeilen 2 denkbar, innerhalb derer die Regalböden 5 relativ weit entfernt voneinander übereinander angeordnet sind; diese Bereiche werden dann zum Lagern hoher Güter verwendet.

Ferner ist es möglich, einzelne Bereiche der Regalzeile 2 für besondere Lagerbedingungen auszustatten, beispielsweise mit einer Kühlung oder mit einer Klimaanlage, die eine bestimmte Luftfeuchte einstellt. Die Kühlung, die auch als Tiefkühlung ausgestattet sein kann, kann für das Lagern gekühlter Waren genutzt werden. Klimatisierte Bereiche, in denen mittels der Klimaanlage die Luftfeuchte eingestellt wird, können beispielsweise zum Lagern von Gütern, die besonders trocken gelagert werden sollten, oder aber beispielsweise zum Lagern von Gütern, die besonders feucht gelagert werden sollten, wie beispielsweise frisches Gemüse, genutzt werden. Die Bereiche der Regalzeile 2, die für besondere Lagerbedingungen ausgestattet sind, können gedämmte Wände aufweisen. Ebenso kann es vorgesehen sein, ein zu einem besonders ausgestatteten Bereich einer Regalzeile 2 zugehöriges Regalmodul 3 mit einem zum Gang 6 weisenden Verschlusselement, wie beispielsweise einem Rollladen, zu versehen, das das Regalmodul 3 zum Gang 6 hin verschließt und somit das Einstellen der besonderen Lagerbedingungen innerhalb des Regalmoduls 3 erleichtert, zugleich aber durch das Öffnen des Verschlusselements, beispielsweise das Hochfahren des Rollladen, einen Zugriff auf ein in diesem Regalmodul 3 unter besonderen Lagerbedingungen gelagertes Gut zu ermöglichen.

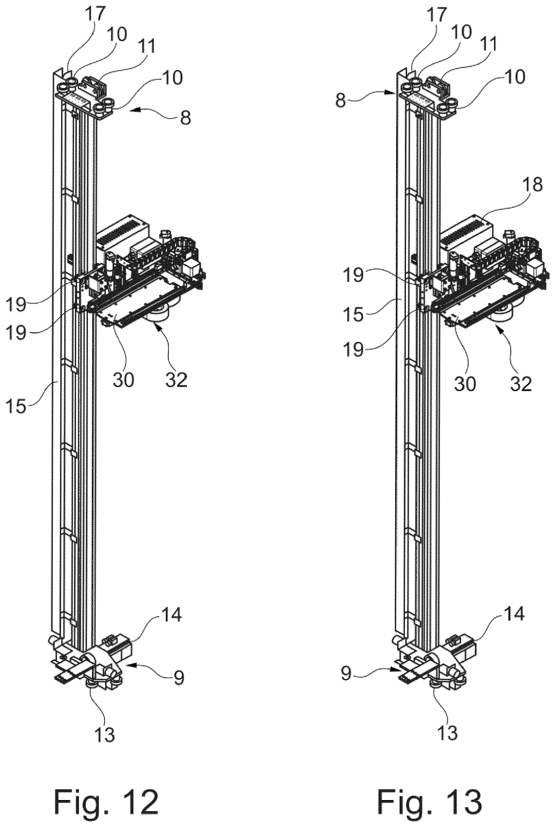

Die einander gegenüberliegenden Regalzeilen 2 bilden zwischen sich einen Gang 6. In dem Gang 6 befinden sich zwei Regalbediengeräte 7, die auch Handhabungsgerät (HHG) genannt werden. Jedes Regalbediengerät 7 kann entlang der Regalzeilen 2 verfahren werden. Wie Fig. 12, 13 besonders gut zeigen, weist das Regalbediengerät 7 eine Kopfführung 8 und eine Fußführung 9 auf. Die Kopfführung 8 weist zwei Rollenpaare 10 auf. Durch die zwei Rollenpaare 10 ist ein (nicht dargestellter) Kopfgurt geführt, auf dem die zwei Rollenpaare 10 abrollen. Ein weiteres Rollenpaar 11 stützt das Regalbediengerät 7 gegen die Decke 20 der Kommissioniervorrichtung 1 ab und rollt an der Decke 20 ab. Die Fußführung 9 weist zwei Rollenpaare 13 auf. Durch die zwei Rollenpaare 10 ist ein (nicht dargestellter) Fußgurt geführt, auf dem die zwei Rollenpaare 13 abrollen. Ein weiteres Rollenpaar 11 stützt das Regalbediengerät 7 gegen den Boden 21 der Kommissioniervorrichtung 1 ab und rollt an dem Boden 21 ab. Die Fußführung 9 weist einen Antrieb 14 auf. Der Antrieb 14 treibt ein Zahnrad an, das in die Zähne des nicht dargestellten, als Zahnriemen ausgeführten Fußgurts eingreift. Der Fußgurt und der Kopfgurt sind ortsfest in der Kommissioniervorrichtung 1 angeordnet. Jeweils ein Fußgurt und ein Kopfgurt erstreckt sich entlang einer Regalzeile 2. Durch Drehen eines im Eingriff mit den Zähnen des Fußgurts stehenden Zahnrads kann der Antrieb 14 das Regalbediengerät 7 entlang des ortsfesten Fußgurts bewegen und mithin das Regalbediengerät 7 entlang der Regalzeile 2 bewegen.

Die relative Position des Regalbediengeräts 7 in Bezug auf die Regalzeile 2 kann wie folgt bestimmt und überwacht werden: Es wird ein Referenzpunkt des Regalbediengeräts 7 in Relation zu der Regalzeile 2 festgelegt. Dieser Referenzpunkt kann beispielsweise ein Endanschlag sein, also ein Anschlag am Ende der Regalzeile 2, über den das Regalbediengerät 7 nicht hinaus bewegt werden kann. In einer bevorzugten Ausführungsform sind zwei Referenzpunkte vorgesehen, beispielsweise zwei Endanschläge, nämlich jeweils ein Endanschlag an einem Ende der Regalzeile 2, zwischen denen sich das Regalbediengerät 7 relativ zur Regalzeile 2 bewegen kann. Die Position des Regalbediengeräts 7 relativ zum Referenzpunkt kann nun aus der Zahnteilung des ortsfesten Fußgurts und der Überwachung der Zahl der Umdrehungen des Zahnrads des Antriebs 14 ermittelt werden. Eichfahrten und regelmäßige Kontrollfahrten sind möglich.

Das Regalbediengerät 7 weist eine vertikale Säule 15 auf. Die Kopfführung 8 ist am oberen Ende der Säule 15 vorgesehen; die Fußführung 9 ist am unteren Ende der Säule 15 vorgesehen.

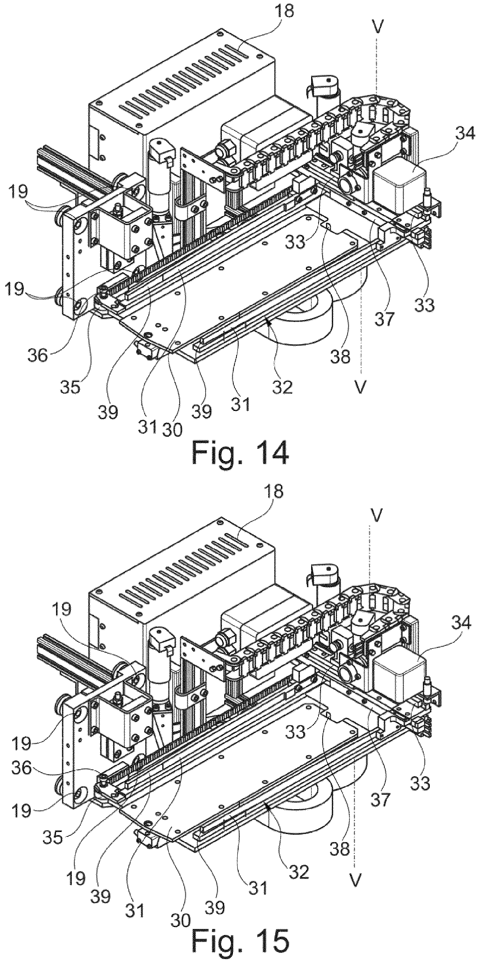

An der Säule 15 ist ein vertikal verfahrbarer Manipulator 16 vorgesehen (vgl. auch Fig. 14, 15). Die Säule 15 weist eine Zahnschiene 17 auf. In die Zahnschiene 17 greift ein (nicht näher dargestelltes) Zahnrad ein, das von einem Antrieb 18 gedreht werden kann. Durch Drehen des Zahnrads kann der Manipulator 16 entlang der ortsfest an der Säule 15 angeordneten Zahnschiene 17 und mithin entlang der Säule 15 verfahren werden. Der Manipulator weist eine Führungsplatte mit Rollen 19 auf, die entlang vertikaler Führungsflächen an der Säule 15 abrollen und das Verfahren des Manipulators 16 entlang der Säule 15 stabilisieren.

Die relative Position des Manipulators 16 in Bezug auf die Säule 15 kann wie folgt bestimmt und überwacht werden: Es wird ein Referenzpunkt des Manipulators 16 in Relation zu der Regalzeile 2 festgelegt. Dieser Referenzpunkt kann beispielsweise ein Endanschlag sein, also ein Anschlag am Ende der Säule 15, über den der Manipulators 16 nicht hinaus bewegt werden kann. In einer bevorzugten Ausführungsform sind zwei Referenzpunkte vorgesehen, beispielsweise zwei Endanschläge, nämlich jeweils ein Endanschlag an einem Ende der Säule 15, zwischen denen sich der Manipulators 16 relativ zur Säule 15 bewegen kann. Die Position des Manipulators 16 relativ zum Referenzpunkt kann nun aus der Zahnteilung der Zahnschiene 17 und der Überwachung der Zahl der Umdrehungen des Zahnrads des Antriebs 18 ermittelt werden. Eichfahrten und regelmäßige Kontrollfahrten sind möglich.

Der Manipulator 16 weist eine Stützfläche 30 auf, auf der Güter während des Transports der Güter in dem Manipulator 16 abgestützt werden können. Die Stützfläche 30 ist in dem Ausführungsbeispiel gemäß Fig. 14, 15 ortsfest ausgeführt. Es sind auch Ausführungsformen möglich, bei denen die Stützfläche 30 linear verfahrbar ausgestaltet ist.

Der Manipulator 16 weist zwei Gabeln 31 auf, die zusammen einen Backengreifer 32 bilden. Am Ende der Gabeln 31 sind Zahnstangen 33 vorgesehen. Ein Antrieb 34 kann ein nicht näher dargestelltes, zwischen den Zahnstangen 33 angeordnetes Zahnrad antreiben. Eine Zahnstange 33 ist auf der einen Seite des Zahnrads angeordnet; die andere Zahnstange 33 ist an der anderen Seite des Zahnrads angeordnet. Durch Drehen des Zahnrads werden die Zahnstangen 33 an dem Zahnrad vorbei bewegt. Aufgrund der Anordnung der Zahnstangen 33 auf gegenüberliegenden Seiten des Zahnrads werden die Zahnstangen 33 bei einem Drehen des Zahnrads in entgegengesetzte Richtungen gedreht. Durch diese Bewegung der Zahnstangen 33 kann der Abstand zwischen den Gabeln 31 vergrößert oder verkleinert werden, je nachdem, ob durch Drehen des Zahnrads die Zahnstangen 33 aufeinander zu oder voneinander weg bewegt werden.

Die relative Position der Gabeln 31 zueinander kann wie folgt bestimmt und überwacht werden: Es wird ein Referenzpunkt festgelegt. Dieser Referenzpunkt kann beispielsweise die vollständig geschlossene Stellung sein, in der die Spitzen der Gabeln 31 aneinander liegen und eine weitere Drehung des Zahnrads nicht mehr möglich ist. Die Position der Gabeln 31 zueinander kann nun aus der Zahnteilung der Zahnstangen 33 und der Überwachung der Zahl der Umdrehungen des Zahnrads des Antriebs 34 ermittelt werden. Eichfahrten und regelmäßige Kontrollfahrten sind möglich.

Der Manipulator 16 weist einen über Rollen (in Fig. 14, 15 ist nur die Rolle 35 am vorderen Ende sichtbar) geführten, umlaufenden Zahnriemen 36 auf. Der Zahnriemen 36 verläuft entlang der Stützfläche 30. Ein Träger 37, der auch den Antrieb 34, die Gabeln 31 und die Zahnstangen 33 trägt, ist mit dem Zahnriemen 36 verbunden. Ein nicht näher dargestellter Antrieb treibt den Zahnriemen 36 an, so dass der Zahnriemen 36 um die Rollen 35 umläuft. Durch die Verbindung mit dem Zahnriemen 36 wird bei einer Bewegung des Zahnriemens 36 auch der Träger 37 und mit ihm der Antrieb 34, die Gabeln 31 und die Zahnstangen 33 bewegt, und zwar entlang und über die Stützfläche 30.

In einer alternativen Ausführungsform ist es möglich, dass der Zahnriemen 36 als ortsfeste Zahnstange ausgeführt wird und der Träger 37 einen Antrieb mit einem Zahnrad aufweist. Durch Drehen des Zahnrads kann der Träger 37 entlang der ortsfesten Zahnstange bewegt werden. Die relative Position des Träger 37 in Bezug auf die Stützfläche 30 kann wie folgt bestimmt und überwacht werden: Es wird ein Referenzpunkt des Träger 37 in Relation zu der Stützfläche 30 festgelegt. Dieser Referenzpunkt kann beispielsweise ein Endanschlag sein, also ein Anschlag am Ende der Stützfläche 30, über den der Träger 37 nicht hinaus bewegt werden kann. In einer bevorzugten Ausführungsform sind zwei Referenzpunkte vorgesehen, beispielsweise zwei Endanschläge, nämlich jeweils ein Endanschlag an einem Ende der Stützfläche 30, zwischen denen sich der Träger 37 relativ zur Stützfläche 30 bewegen kann. Die Position des Trägers 37 relativ zum Referenzpunkt kann nun aus der Zahnteilung der Zahnstange und der Überwachung der Zahl der Umdrehungen des Zahnrads des Antriebs ermittelt werden. Eichfahrten und regelmäßige Kontrollfahrten sind möglich.

An dem Träger 37 ist ein Schieber 38 vorgesehen. Dieser kann bei auf der Stützfläche 30 aufliegenden Gütern von hinten an die Güter stoßen und die Güter entlang der Stützfläche 30 schieben.

Fig. 14 und Fig. 15 zeigen, dass die Gabeln 31 Pads 39 haben. Die Pads 39 können auf das zu ergreifende Gut abgestimmt sein. So ist eine erste Ausführungsform, nämlich die in Fig. 14 gezeigte, denkbar, bei denen die Pads 39 aus Gummi sind und einen guten Reibwert haben, um eine Kartonpackung sicher zu greifen. So ist eine zweite Ausführungsform, nämlich die in Fig. 15 gezeigte, denkbar, bei denen die Pads 39 leicht magnetisch sind, um eine ferromagnetische Packung sicher zu greifen.

Die Stützfläche 30 und der Träger 37 und der Zahnriemen 36 lassen sich um die Vertikalachse A drehen, so dass ein Regalbediengerät 7 sowohl in Regalböden 5 der ihm näheren Regalzeile 2 als auch in Regalböden 5 der auf der anderen Seite des Gangs 6 angeordneten Regalzeile 2 eingreifen kann.

Die relative Position des Regalbediengeräts 7 in Bezug auf die Regalzeile 2 kann wie folgt bestimmt und überwacht werden: Es wird ein Referenzpunkt des Regalbediengeräts 7 in Relation zu der Regalzeile 2 festgelegt. Dieser Referenzpunkt kann beispielsweise ein Endanschlag sein, also ein Anschlag am Ende der Regalzeile 2, über den das Regalbediengerät 7 nicht hinaus bewegt werden kann. In einer bevorzugten Ausführungsform sind zwei Referenzpunkte vorgesehen, beispielsweise zwei Endanschläge, nämlich jeweils ein Endanschlag an einem Ende der Regalzeile 2, zwischen denen sich das Regalbediengerät 7 relativ zur Regalzeile 2 bewegen kann. Die Position des Regalbediengeräts 7 relativ zum Referenzpunkt kann nun aus der Zahnteilung des ortsfesten Fußgurts und der Überwachung der Zahl der Umdrehungen des Zahnrads des Antriebs 14 ermittelt werden. Eichfahrten und regelmäßige Kontrollfahrten sind möglich.

Der Manipulator 16 kann ein auf einem Regalboden 5 liegendes Gut erfassen, indem er mit etwas weiter gespreizten Gabeln 31 als die Breite des Guts in das Regalmodul 3 einfährt, so dass je eine Gabel 31 auf einer Seite des Guts angeordnet ist. Durch Zusammenfahren der Gabel 31 mittels des Antriebs 34 können die Gabeln 31 in Anlage mit dem Gut gebracht werden und eine Klemmkraft auf das Gut ausüben. Durch Zurückfahren der Gabeln 31 mittels Bewegen des Zahnriemens 36 kann das Gut von den Gabeln 31 auf die Stützfläche 30 verbracht werden.

Der Manipulator 16 kann ein auf der Stützfläche 30 liegendes Gut auf einen neben der Stützfläche 30 angeordneten Regalboden 5 einlagern, indem die Gabeln 31 und der Schieber 38 durch Bewegen des Zahnriemens 36 nach vorne gefahren werden und das Gut mittels des Schiebers 38 von der Stützfläche 30 auf den Regalboden 5 geschoben wird.

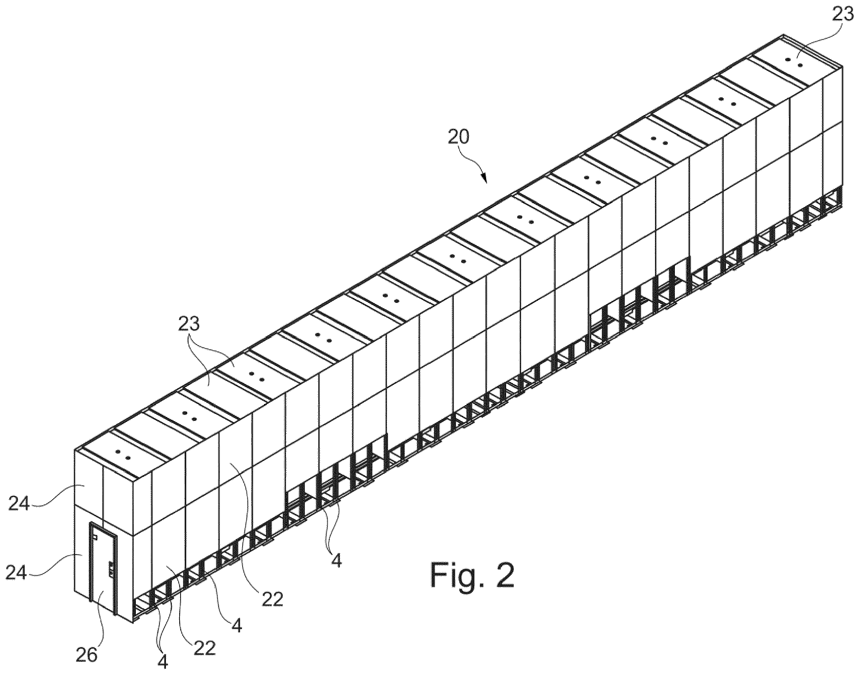

Die Kommissioniervorrichtung weist Wandpaneele 22 auf. Diese bilden die jeweiligen Rückwände der Regalzeilen 2 und schließen diese nach außen ab. In Fig. 2 sind einige Wandpaneele 22 weggelassen worden, um einen Einblick auf die Streben 4 der Regalmodule 3 zu geben. Ferner weist die Kommissioniervorrichtung 1 Deckenpaneele 23 auf, die den Teil der Decke 20 der Kommissioniervorrichtung 1 bilden. Die Deckenpaneele 23 können transparent oder opak sein, um Licht in die Kommissioniervorrichtung 1 zu lassen. Die Deckenpaneele 23 können undurchsichtig sein, um Licht aus der Kommissioniervorrichtung 1 fern zu halten, beispielsweise um lichtempfindliche Güter zu schützen. Die Kommissioniervorrichtung weist Seitenpaneele 24 auf. Diese bilden die jeweiligen Seitenwände der Regalzeilen 2 und schließen diese nach außen ab. In einem Seitenpaneel 24 kann ein Fenster 25 vorgesehen sein, um einen Einblick in den Gang 6 zu gewähren. An einer Seite der Kommissioniervorrichtung 1 kann eine Tür 26 vorgesehen sein.

An einer Seite der Kommissioniervorrichtung 1 ist eine Aufgabestation 40 vorgesehen. Die Aufgabestation 40 weist ein Förderband 41 auf, auf das einzulagernde Güter aufgelegt werden können. Die auf dem Förderband 41 liegenden Güter werden in die Aufgabestation 40 gefördert, dort identifiziert und mittels eines nicht näher dargestellten Umsetzers auf Tablare 42 umgesetzt. Die Tablare 42 befinden sich im Zugriffsbereich des Regalbediengeräts 7, so dass das Regalbediengerät 7 die auf den Tablaren 42 befindlichen Güter mittels des Backengreifers 32 aufgreifen kann. Für das Identifizieren beim Umsetzen kann insbesondere bevorzugt das in DE 10 2004 007 962 A1 beschriebene Verfahren eingesetzt werden.

An einer Seite der Kommissioniervorrichtung 1 ist eine Ablage 43 für Transportkisten vorgesehen. Die Transportkisten können auf dieser Ablage 43 nebeneinander angeordnet werden und die Güter aus den Transportkisten auf das Förderband 41 gelegt werden.

An einer Seite der Kommissioniervorrichtung 1 ist ein Touchscreen 44 als Schnittstelle zur Interaktion zwischen dem Bediener und der Kommissioniervorrichtung 1 vorgesehen.

An einer Seite der Kommissioniervorrichtung 1 sind vier Ausgaben 45 vorgesehen, die jeweils als aus dem jeweiligen Regalmodul 5 nach außen herausführende Rutschen ausgeführt sind. Bei den oberen beiden Ausgaben 45 ist eine Ausgabefläche 46 vorgesehen, auf der ein die Rutsche herunterrutschendes Gut zu liegen kommt und vom Bediener ergriffen werden kann. Bei den unteren beiden Ausgaben 45 sind Transportkisten 47 vorgesehen, in die ein die Rutsche herunterrutschendes Gut fällt. Die oberen Enden 48 der Rutschen liegen im Zugriffsbereich des Regalbediengeräts 7, so dass Güter oben auf die Rutsche aufgegeben werden können.

Der Manipulator 16 weist eine Schnittstelle auf, an der der Manipulator 16 mit weiteren Bauteilen des Regalbediengeräts 7 verbunden werden kann und an der der Manipulator 16 von den weiteren Bauteilen des Regalbediengeräts 7 getrennt werden kann. Die Schnittstelle kann durch die Führungsplatte mit Rollen 19 gebildet werden. Durch die Schnittstelle ist der Manipulator 16 leicht austauschbar. Dadurch werden Betriebssituationen der Kommissioniervorrichtung 1 möglich, in denen ein Manipulator 16 eines ersten Typs, der für das Aus- und/oder Einlagern eines ersten Typs von Gütern (beispielsweise flache Packungen) besonders gut, aber für das Aus- und/oder Einlagern eines zweiten Typs von Gütern (beispielsweise Flaschen) etwas weniger gut geeignet ist, gegen einen Manipulator 16 eines zweiten Typs ausgetauscht wird, der für das Aus- und/oder Einlagern eines zweiten Typs von Gütern (beispielsweise Flaschen) besser geeignet ist. Je nach Gestaltung der Schnittstelle kann dieser Austausch automatisiert erfolgen, so dass es nicht notwendig ist, dass der Bediener den Austausch vornimmt.

Die Kommissioniervorrichtung 1 weist zwei Regalbediengeräte 7 auf. Das eine Regalbediengerät 7 ist mit einem Manipulator 16 eines ersten Typs ausgestattet und kann beispielsweise flache Packungen besonders gut ein- und/oder auslagern. Das andere Regalbediengerät 7 ist mit einem Manipulator 16 eines zweiten Typs ausgestattet und kann beispielsweise Flaschen besonders gut ein- und/oder auslagern.

Die das Fenster 25 aufweisende Seitenwand der Kommissioniervorrichtung 1 kann gesamthaft geöffnet werden und ein Regalbediengerät 7 kann als solches aus der entstehenden Öffnung entnommen werden. Dadurch wird es beispielsweise möglich, zu Wartungszwecken ein Regalbediengerät 7 komplett zu entnehmen oder komplett auszutauschen.

## Patentansprüche

1. Verfahren zur Instandsetzung einer Kommissioniervorrichtung (1), wobei die Kommissioniervorrichtung (1) mindestens
• ein Regal zum Lagern von Gütern,
• ein Regalbediengerät (7), das dazu geeignet ist, Güter an bestimmten Orten des Regals einzulagern, und/oder dazu geeignet ist, Güter, die sich an einem bestimmten Ort des Lagers befinden, auszulagern, und
• eine Steuerung, die dazu ausgeführt ist, Bewegungen des Regalbediengeräts (7) und/oder Bewegungen von Komponenten des Regalbediengeräts zu steuern,
aufweist und die Kommissioniervorrichtung (1) einen Wartungsort aufweist, wobei die Steuerung das Regalbediengerät (7) an den Wartungsort verfahren kann und/oder die Steuerung das Regalbediengerat (7) von dem Wartungsort fortfahren kann,
**dadurch gekennzeichnet, dass**
• ein erstes Regalbediengerät (7) an den Wartungsort verfahren wird,
• das erste Regalbediengerät (7) an dem Wartungsort aus der Kommissioniervorrichtung entnommen wird,
• ein zweites Regalbediengerät (7) an dem Wartungsort in die Kommissioniervorrichtung (1) eingesetzt wird und
• das zweite Regalbediengerät (7) von dem Wartungsfort fortgefahren wird.

2. Verfahren nach Anspruch 1, **gekennzeichnet durch** eine Schiene, die von einem vor dem Regal befindlichen Arbeitsbereich zu dem Wartungsort führt, wobei das Regalbediengerät (7) entlang der Schiene von dem Arbeitsbereich an den Wartungsort verfahren werden kann und/oder entlang der Schiene von dem Wartungsort in den Arbeitsbereich gefahren werden kann.

3. Verfahren nach Anspruch 1 oder 2, **dadurch gekennzeichnet, dass** die Kommissioniervorrichtung (1) einen Innenraum aufweist und dass der Wartungsort außerhalb des Innenraums liegt.

4. Verfahren nach einem der Ansprüche 1 bis 3, **dadurch gekennzeichnet, dass** ein Regalbediengerät (7), das von dem Wartungsort fort in einen Arbeitsbereich des Regalbediengeräts (7) verfahren wird, eine Kalibrierfahrt durchführt.
